(19) Europäisches Patentamt
European Patent Office
Office européen des brevets

(11) EP 4 386 927 B1

# (12) EUROPEAN PATENT SPECIFICATION

(45) Date of publication and mention of the grant of the patent:
**15.07.2026 Bulletin 2026/29**

(21) Application number: **23852874.9**

(22) Date of filing: **03.08.2023**

(51) International Patent Classification (IPC):
***H01M 10/0585*** (2010.01) ***H01M 10/0583*** (2010.01)
***H01M 10/42*** (2006.01) ***H01M 10/052*** (2010.01)
***H01M 50/548*** (2021.01) ***H01M 50/557*** (2021.01)
***H01M 4/02*** (2006.01) ***H01M 4/04*** (2006.01)
***H01M 10/0525*** (2010.01)

(52) Cooperative Patent Classification (CPC):
**H01M 10/0585; H01M 4/0404; H01M 10/0525; H01M 50/548;** H01M 2004/021; H01M 2010/4292; Y02E 60/10; Y02P 70/50

(86) International application number:
**PCT/KR2023/011396**

(87) International publication number:
**WO 2024/034994 (15.02.2024 Gazette 2024/07)**

## (54) ELECTRODE ASSEMBLY, LITHIUM SECONDARY BATTERY INCLUDING SAME, METHOD FOR MANUFACTURING ELECTRODE ASSEMBLY, AND METHOD FOR MANAGING ELECTRODE SLIDING STANDARD

ELEKTRODENANORDNUNG, LITHIUMSEKUNDÄRBATTERIE DAMIT, VERFAHREN ZUR HERSTELLUNG DER ELEKTRODENANORDNUNG UND VERFAHREN ZUR VERWALTUNG DES ELEKTRODENGLEITSTANDARDS

ENSEMBLE ÉLECTRODE, BATTERIE SECONDAIRE AU LITHIUM LE COMPRENANT, PROCÉDÉ DE FABRICATION DE L'ENSEMBLE ÉLECTRODE ET PROCÉDÉ DE GESTION DE NORME DE GLISSEMENT D'ÉLECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2022 KR 20220098524**

(43) Date of publication of application:
**19.06.2024 Bulletin 2024/25**

(73) Proprietor: **LG Energy Solution, Ltd.**
**Seoul 07335 (KR)**

(72) Inventors:
- **YANG, Seung Gi**
**Daejeon 34122 (KR)**
- **LEE, Ung Ju**
**Daejeon 34122 (KR)**
- **KIM, Dae Wook**
**Daejeon 34122 (KR)**

(74) Representative: **Plasseraud IP**
**104 Rue de Richelieu**
**CS92104**
**75080 Paris Cedex 02 (FR)**

(56) References cited:
**WO-A1-2022/034995**
**JP-A- 2009 038 016**
**KR-A- 20100 112 548**
**KR-A- 20170 111 725**
**KR-A- 20210 038 257**
**KR-A- 20210 061 619**
**KR-A- 20220 021 841**
**KR-A- 20220 057 713**
**US-B2- 10 217 988**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 386 927 B1

## Description

[Technical Field]

The present invention relates to an electrode assembly for preventing lithium precipitation, a lithium secondary battery including the electrode assembly, a method for manufacturing the electrode assembly, and a method for managing an electrode sliding standards.

[Background Technology of the Invention]

The demand for batteries as an energy source is increasing rapidly due to technological development and increasing demand in industries such as mobile devices, automobiles, and energy storage. Among these secondary batteries, a lot of research has been done on lithium secondary batteries with high energy density and discharge voltage and are commercialized and widely used.

Depending on the shape of the battery case, secondary batteries are classified into cylindrical and prismatic batteries, where an electrode assembly is embedded in a cylindrical or prismatic metal can, and pouch-type batteries, where an electrode assembly is embedded in a pouch-type case made of aluminum laminated sheet.

Moreover, a jelly-roll type electrode assembly, wherein an electrode assembly embedded in a battery case, is a rechargeable power generator comprising a laminated structure of positive electrode/separator/negative electrode, wherein a separator is interposed between the positive electrode and the negative electrode of the long sheet type on which an electrode mixture including an electrode active material is applied and wound, a stack-type (laminated) electrode assembly in which a number of positive electrodes and negative electrodes punched and notched in predetermined sized units are stacked sequentially with a separator interposed between them, and a stack/folding-type electrode assembly having a structure in which bi-cells or full cells are wound by laminating predetermined units of positive electrode and negative electrode, and a separator interposed therebetween can be exemplified.

The positive electrode and negative electrode comprising the electrode assembly are manufactured by applying a slurry for electrode mixture manufactured in the mixing process to the electrode current collector in a predetermined pattern and a certain thickness through a slot die, and then drying it. However, since the electrode mixture slurry is a fluid, in the electrode mixture layer after the electrode mixture slurry application process, the electrode mixture slurry flows down due to its fluidity, which is called sliding.

FIG. 1 illustrates an electrode sheet with an electrode mixture applied to a sheet-type current collector, and FIG. 2 illustrates a cross-sectional view of the electrode sheet cut along a cutting-plane line (dashed line) in FIG. 1. Referring to these drawings, the electrode mixture applied part 2 on which the electrode mixture is applied gradually decreases in thickness along the direction toward the electrode mixture non-applied part 1 at both edges of the width direction x of the electrode sheet, forming an inclined surface in the plane of the current collector. This is referred to as a sliding region S. Such a sliding region may be formed within 30 mm, or within 20 mm, along the inward direction of the electrode mixture application part, from the boundary line between the electrode mixture non-applied part without the electrode mixture applied and the electrode mixture applied part with the electrode mixture applied.

Meanwhile, referring to FIG. 3, the positive electrode 10 and the negative electrode 20 comprising the electrode assembly are facing each other with a separator (not illustrated) interposed between them, and the length of the sliding region S of the positive electrode and the length of the sliding region S' of the negative electrode may appear differently, and the inclined shape of the sliding region may appear variously, such as an upwardly convex shape, a downwardly convex shape, a straight shape, an S-shape, and the slope may appear differently even if the inclined shape is the same. As a result, depending on the facing position of the positive and negative electrodes, there may be a localized imbalance in the NP ratio, which may cause lithium to precipitate from the negative electrode and cause safety accidents such as short circuits.

Therefore, it is necessary to develop a technology to prevent an imbalance in the NP ratio in the process of manufacturing positive electrodes and negative electrodes, but conventionally, there have been limitations in managing the NP ratio in each unit process of the electrode slurry application process, drying and rolling process, and punching and notching process due to the cumbersome measurement of the thickness of the electrode mixture layer in the sliding region and the lack of a standardized method. Therefore, it is necessary to develop a technology for electrode assemblies that prevent localized NP ratio imbalance in the sliding region during electrode manufacturing, and management methods for electrode sliding standards to prevent NP ratio imbalance.

Patent document KR20220057713A discloses a method for preventing the reversal of NP-Ratio by managing the loading amount and thickness of the electrode mixture layer according to the location where the anode and the cathode face each other.

[Description of the Invention]

[Technical Problem]

A first problem that the technical ideas of the present invention seek to solve is to provide an electrode assembly, a secondary battery comprising the same, and a method of manufacturing the same, that prevents the risk of NP ratio reversal when at least one among the positive electrode and negative electrode includes a sliding region, even when the positive electrode and negative electrode are present in the same conventional face-to-face position.

A second problem that the technical ideas of the present invention seek to solve is to provide a standardized method of managing sliding standards to prevent the risk of reversal of the NP ratio in the manufacturing process of electrodes including sliding regions.

[Technical Solution]

The invention is as defined in the appended claims.

According to the present invention, an electrode assembly is provided. In the electrode assembly for a lithium secondary battery, a positive electrode and negative electrode are facing each other with a separator between them, but the protrusion direction of the positive electrode tab is opposite to the protrusion direction of the negative electrode tab, the negative electrode tab includes: a negative electrode shoulder line part in which a negative electrode mixture is applied on a negative electrode current collector and a negative electrode non-coated part in which a negative electrode mixture is not applied, the negative electrode shoulder line part includes: a negative electrode sliding region that forms an inclined plane to the negative electrode current collector plane as the thickness of the negative electrode mixture layer decreases along the protrusion direction of the negative electrode tab;

wherein a first negative electrode thickness ratio $RT_{N1}$(=$T_{N1}/T_{NC}$) and a first positive electrode thickness ratio $RT_{P1}$ (=$T_{P1}/T_{PC}$) satisfy Condition 1 below;
wherein the first negative electrode thickness ratio is a ratio of a thickness $T_{N1}$ of a negative electrode mixture layer at a first face-to-face position where the negative electrode faces a lower end part of the positive electrode, to a thickness $T_{NC}$ of the negative electrode mixture layer at a center part of the negative electrode, and
wherein the first positive electrode thickness ratio is a ratio of a thickness $T_{P1}$ of a positive electrode mixture layer at the lower end part of the positive electrode, to a thickness $T_{PC}$ of the positive electrode mixture layer at a center part of the positive electrode;

[Condition 1]

$$RT_{N1} \geq (RT_{P1} / \text{NP Ratio}) \times 100.1$$

wherein in the Condition 1, the NP Ratio is a ratio value of negative electrode capacity to positive electrode capacity per unit area, and is a preset value.

A second negative electrode thickness ratio $RT_{N2}$(=$T_{N2}/T_{NC}$) and a second positive electrode thickness ratio $RT_{P2}$(=$T_{P2}/T_{PC}$) may satisfy Condition 2 below,

wherein the second negative electrode thickness ratio is a ratio of a thickness $T_{N2}$ of the negative electrode mixture layer at the second face-to-face position where the negative electrode faces an upper end part of the positive electrode, to the thickness $T_{NC}$ of the negative electrode mixture layer at the center part of the negative electrode, and
wherein the second positive electrode thickness ratio is a ratio of a thickness $T_{P2}$ of the positive electrode mixture layer at the upper end part of the positive electrode, to the thickness $T_{PC}$ of the positive electrode mixture layer at the center part of the positive electrode;

[Condition 2]

$$RT_{N2} \geq (RT_{P2} / \text{NP Ratio}) \times 100.1$$

wherein in the Condition 2, the NP Ratio is a ratio value of negative electrode capacity to positive electrode capacity per unit area, and is a preset value.

A ratio value of length L1 of the negative electrode shoulder line part, to a length L3, which is from the first face-to-face position to an end part of the negative electrode shoulder line part may be between 0.5 and 0.9.

The first positive electrode thickness ratio $RT_{P1}(=T_{P1}/T_{PC})$ may be from 0.6 to 1.

A positive electrode tab of the positive electrode may include a positive electrode shoulder line part with a positive electrode mixture applied on a positive electrode current collector, and a positive electrode non-coated part without a positive electrode mixture applied, and the positive electrode shoulder line part may include a positive electrode sliding region wherein the thickness of the positive electrode mixture layer decreases along the protrusion direction of a positive electrode tab, forming an inclined plane to a positive electrode current collector plane.

According to another embodiment of the present invention, a lithium secondary battery is provided, and the lithium secondary battery may include one or more of the electrode assemblies.

According to another embodiment of the present invention, a manufacturing method of the electrode assembly is provided. The manufacturing method of the electrode assembly includes: preparing an electrode sheet comprising, an electrode mixture applied part to which an electrode mixture is applied on an electrode current collector sheet, and an electrode mixture non-applied part to which an electrode mixture is not applied and is located at least at one edge of the electrode mixture applied part; a thickness measurement process including: measuring a thickness of each electrode mixture layer at a plurality of points selected at a boundary part of the electrode mixture applied part and electrode mixture non-applied part, and measuring a thickness of an electrode mixture layer at a center part of the electrode mixture applied part; calculating an electrode thickness ratio including: calculating a ratio of a thickness of an electrode mixture layer at each of the plurality of points, to a thickness of an electrode mixture layer at a center part of the electrode mixture applied part; setting up a positive/negative electrode notching predetermined line that sets a notching predetermined line notching in the form of individual positive electrodes and individual negative electrodes, on positive electrode sheets and negative electrode sheets, based on calculated positive electrode thickness ratio values and negative electrode thickness ratio values; a notching process that notches according to the set notching predetermined line; and a lamination process of laminating by interposing a separator between the notched positive electrode and negative electrode, wherein the positive/negative electrode notching predetermined line setting process includes: determining a positive electrode first face-to-face predetermined line P3 on a positive electrode sheet and determining a negative electrode face-to-face predetermined line P1 on a negative electrode sheet; determining the positive electrode first face-to-face predetermined line P3 as a positive electrode lower end part notching predetermined line; and determining a negative electrode upper end part notching predetermined line based on the negative electrode first face-to-face predetermined line P1, wherein the negative electrode first face-to-face predetermined line P1 and the positive electrode first face-to-face predetermined line P3 are determined such that a negative electrode thickness ratio at the negative electrode first face-to-face predetermined line P1 and a positive electrode thickness ratio at the positive electrode first face-to-face predetermined line P3 satisfy Condition 3 below.

$$\text{Negative electrode thickness ratio} \geq (\text{Positive electrode thickness ratio}/\ \text{NP Ratio}) \times 100.\ 1 \qquad \text{[Condition 3]}$$

wherein in the Condition 3, the NP Ratio is a ratio value of negative electrode capacity to positive electrode capacity per unit area, and is a preset value.

The positive/negative electrode notching predetermined line setting process may further include: making a table of a combination of a positive electrode thickness ratio and a negative electrode thickness ratio satisfying Condition 3 according to a preset NP Ratio value.

In determining the negative electrode upper end part notching predetermined line, the negative electrode upper end part notching predetermined line may be determined as an imaginary line connecting points spaced apart by a planar spacing G1 of the positive electrode and negative electrode from the negative electrode first face-to-face predetermined line along a width direction of the negative electrode sheet.

The positive/negative electrode notching predetermined line setting process may further include: determining a positive electrode second face-to-face predetermined line P4 in the positive electrode sheet, and determining a negative electrode second face-to-face predetermined line P2 in the negative electrode sheet, wherein the negative electrode second face-to-face predetermined line P2 and the positive electrode second face-to-face predetermined line P4 are determined such that a negative electrode thickness ratio at the negative electrode second face-to-face predetermined line P2 and a positive electrode thickness ratio at the positive electrode second face-to-face predetermined line P4 satisfy Condition 3.

The negative electrode second face-to-face predetermined line P2 may be determined as an imaginary line connecting points spaced apart by a full-length direction length C of the positive electrode from the negative electrode first face-to-face predetermined line P1 along a width direction of the negative electrode sheet.

The positive/negative electrode notching predetermined line setting process may further include: determining the positive electrode second face-to-face predetermined line P4 as a positive electrode upper end part predetermined line; and determining an imaginary line connecting points spaced apart by a full-length direction length A of the negative electrode along a width direction of the negative electrode sheet from the negative electrode upper end part notching predetermined line, as a negative electrode lower end part notching predetermined line.

The positive/negative electrode notching predetermined line setting process may further include determining a positive electrode tab notching predetermined line and a negative electrode tab notching predetermined line, wherein in determining a positive electrode tab notching predetermined line and a negative electrode tab notching predetermined line, a positive electrode tab notching predetermination line is set such that the positive electrode tab includes a positive electrode shoulder line part with a positive electrode mixture applied thereto, and a negative electrode tab notching predetermination line is set such that the negative electrode tab includes a negative electrode shoulder line part with a negative electrode mixture applied thereto.

The lamination process may include laminating a positive electrode such that a positive electrode lower end part notching predetermined line of the notched positive electrode is located on a first face-to-face predetermined line of the notched negative electrode.

The lamination process may include laminating a positive electrode such that a positive electrode upper end part notching predetermined line of the notched positive electrode is located on a second face-to-face predetermined line of the notched negative electrode.

According to another exemplary embodiment of the present disclosure, a management method of an electrode sliding standard is provided. The electrode sliding standards management method is a method of managing an electrode sliding standards of electrode including a sliding region in which a thickness of an electrode mixture layer gradually decreases to form an inclined plane with respect to a current collector plane, including: measuring the thickness TPC of a positive electrode mixture layer at the center part of the positive electrode, and the thickness TP1 of the positive electrode mixture layer at the lower end part predetermined area of the positive electrode, on the positive electrode sheet, respectively, and calculating the first positive electrode thickness ratio $RT_{P1}(=T_{P1}/T_{PC})$, which is the ratio of $T_{P1}$ to $T_{PC}$; determining a negative electrode first face-to-face predetermined line P1 on the negative electrode sheet to face the positive electrode lower end part predetermined area; measuring a thickness $T_{NC}$ of the negative electrode mixture layer at the center part of the negative electrode and a thickness $T_{N1}$ of the negative electrode mixture layer at the negative electrode first face-to-face predetermined line P1, on the negative electrode sheet, respectively, and calculating the first negative electrode thickness ratio $RT_{N1}(=T_{N1}/T_{NC})$, which is the ratio of $T_{N1}$ to $T_{NC}$; and confirming whether a relationship between the first positive electrode thickness ratio $RT_{P1}$ and the first negative electrode thickness ratio $RT_{N1}$ satisfies Condition 1 below.

[Condition 1]

$$RT_{N1} \geq (RT_{P1} / \text{NP Ratio}) \times 100.1$$

in the Condition 1, the NP Ratio is a the ratio value of negative electrode capacity to positive electrode capacity per unit area, and is a preset value.

In the electrode sliding standards management method according to an exemplary embodiment, it may further include: measuring the thickness $T_{P2}$ of the positive electrode mixture layer at the positive electrode upper end part predetermined area, and calculating the second positive electrode thickness ratio $RT_{P2}(=T_{P2}/T_{PC})$, which is the ratio of $T_{P2}$ to $T_{PC}$; determining a negative electrode second face-to-face predetermined line P2 to face the positive electrode upper end part in the negative electrode sheet; measuring the thickness $T_{N2}$ of the negative electrode mixture layer at the second negative electrode face-to-face predetermined line P2, and calculating the second negative electrode thickness ratio $RT_{N2}(=T_{N2}/T_{NC})$, which is the ratio of $T_{N2}$ to $T_{NC}$; and determining whether a relationship between the second positive electrode thickness ratio $RT_{P2}$ and the second negative electrode thickness ratio $RT_{N2}$ satisfies Condition 2 below.

[Condition 2]

$$RT_{N2} \geq (RT_{P2} / \text{NP Ratio}) \times 100.1$$

wherein in the Condition 2, the NP Ratio is a ratio value of negative electrode capacity to positive electrode capacity per unit area and is a present value.

In the electrode sliding standards management method according to an exemplary embodiment, in determining the negative electrode first face-to-face predetermined line, the negative electrode first face-to-face predetermined line P1 may be determined as an imaginary line connecting points spaced apart by a length L1 of the negative electrode shoulder line part and a planar spacing G1 of the positive electrode and negative electrode along the width direction from the boundary line of the negative electrode mixture applied part and the negative electrode mixture non-applied part.

In the electrode sliding standards management method according to an exemplary embodiment, in determining the negative electrode second face-to-face predetermined line, the negative electrode second face-to-face predetermined line P2 may be determined as an imaginary line connecting points spaced apart by a full-length direction length C of the positive electrode along a width direction from the negative electrode first face-to-face predetermined line P1.

[Advantageous Effects]

The electrode assembly and the method of manufacturing the electrode assembly according to exemplary embodiments of the present invention have the effect of preventing the phenomenon of a localized reversal of the NP ratio in the electrode sliding region.

According to exemplary embodiments of the present invention, the positive electrode thickness ratio and the negative electrode thickness ratio calculated at a specific face-to-face position where the positive electrode and the negative electrode face each other satisfy predetermined conditions to ensure prevention of a localized NP Ratio reversal risk, and the sliding region where the NP Ratio reversal risk exists can be managed in a standardized way.

[Brief Description of the Drawings]

FIG. 1 is a top view of an electrode sheet with an electrode mixture applied on a current collector.

FIG. 2 is a cross-sectional view of an electrode sheet cut along the cut line (dotted line) in FIG. 1.

FIG. 3 is a conceptual diagram to illustrate the concept of an imbalance in the NP ratio in the electrode sliding region.

FIG. 4 is a cross-sectional view of an electrode assembly according to an exemplary embodiment of the present invention.

FIG. 5 is a cross-sectional view of the electrode assembly enlarged at portion A of FIG. 4.

FIG. 6 is a top view of portion A of FIG. 4.

FIG. 7 is a cross-sectional view of the electrode assembly enlarged at portion B of FIG. 4.

FIG. 8 is a top view of portion B of FIG. 4.

FIGS. 9 and 10 are flowcharts to illustrate a method of manufacturing an electrode assembly according to an exemplary embodiment of the present invention.

FIG. 11 is a drawing to illustrate a method of manufacturing an electrode assembly according to an exemplary embodiment of the present invention.

FIG. 12 is a flowchart to illustrate a method for managing electrode sliding standards according to an exemplary embodiment of the present disclosure.

[Reference numerals]

10: POSITIVE ELECTRODE SHEET
11: POSITIVE ELECTRODE MIXTURE NON-APPLIED PART
12: POSITIVE ELECTRODE MIXTURE APPLIED PART
20: NEGATIVE ELECTRODE SHEET
21: NEGATIVE ELECTRODE MIXTURE NON-APPLIED PART
22: NEGATIVE ELECTRODE MIXTURE APPLIED PART
100: ELECTRODE ASSEMBLY
110: POSITIVE ELECTRODE, POSITIVE ELECTRODE NOTCHING PREDETERMINED LINE
120: NEGATIVE ELECTRODE, NEGATIVE ELECTRODE NOTCHING PREDETERMINED LINE
111: POSITIVE ELECTRODE TAB
121: NEGATIVE ELECTRODE TAB
111A: POSITIVE ELECTRODE SHOULDER LINE PART
111B: POSITIVE ELECTRODE NON-COATED PART
121a: NEGATIVE ELECTRODE SHOULDER LINE PART
121b: NEGATIVE ELECTRODE NON-COATED PART
P1: NEGATIVE ELECTRODE FIRST FACE-TO-FACE PREDETERMINED LINE
P2: NEGATIVE ELECTRODE SECOND FACE-TO-FACE PREDETERMINED LINE
P3: POSITIVE ELECTRODE FIRST FACE-TO-FACE PREDETERMINED LINE
P4: POSITIVE ELECTRODE SECOND FACE-TO-FACE PREDETERMINED LINE

[Best Mode for Carrying out the Invention]

The following is a detailed description of the present invention. It should be noted that the terms or words used in this specification and the claims of the patent are not to be construed in their ordinary or dictionary sense, but rather in a sense and concept consistent with the technical idea of the present invention, based on the principle that the inventor may properly define the concept of a term to best describe his invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance. In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In this specification, NP Ratio is a preset value, meaning the ratio of the negative electrode capacity to the positive electrode capacity per unit area. It may be determined according to the specifications of the product, and the NP Ratio has a value of 100% or more, and the unit of % is omitted in conditions 1 to 3. The specific numerical range of the NP Ratio may be, for example, 100 or more and 200 or less, 100 or more and 180 or less, 100 or more and 160 or less, 101 to 140.

In this specification, a sliding region refers to a region around the boundary of an electrode mixture non-applied part where no electrode mixture (positive electrode mixture layer and negative electrode mixture layer) has been applied and an electrode mixture applied part where electrode mixture has been applied, where the thickness of the electrode mixture layer is not constant and gradually decreases as it approaches the electrode mixture non-applied part, forming an inclined plane with respect to the current collector plane.

In this specification, a positive electrode upper end part refers to the end of the positive electrode corner part from which the positive electrode tab protrudes, and a negative electrode upper end part refers to the end of the negative electrode corner part from which the negative electrode tab protrudes.

In this specification, a positive electrode lower end part refers to the end of the positive electrode corner part opposite the positive electrode corner part from which the positive electrode tab protrudes, and a negative electrode lower end part refers to the end of the negative electrode corner part opposite the negative electrode corner part from which the negative electrode tab protrudes.

In this specification, the center part of the negative electrode (positive electrode), which is a region excluding the sliding region, is a broad concept referring to a region of the negative electrode (positive electrode) mixture layer in which the thickness of the negative electrode (positive electrode) mixture layer is constant and unchanged as it is parallel to the plane of the current collector, and does not necessarily refer to a specific point in the center part of the full-length direction (x) of the negative electrode (positive electrode).

In this specification, the width direction of the electrode sheet and the full-length direction of the electrode are defined as the y-axis direction, the transfer direction (MD) of the electrode sheet and the full-width direction of the electrode are defined as the x-axis direction, and the thickness direction of the electrode and the thickness direction of the electrode assembly are defined as the z-axis direction.

(First embodiment)

The present invention provides an electrode assembly as a first embodiment.

FIG. 4 is a cross-sectional view of an electrode assembly according to an exemplary embodiment of the present invention, FIG. 5 is a cross-sectional view of an electrode assembly enlarged at portion A of FIG. 4, FIG. 6 is a top view of portion A of FIG. 4, FIG. 7 is a cross-sectional view of an electrode assembly enlarged at portion B of FIG. 4, and FIG. 8 is a top view of portion B of FIG. 4.

Referring to these drawings, an electrode assembly 100 for a lithium secondary battery according to an exemplary embodiment of the present invention includes a positive electrode 110 and a negative electrode 120 facing each other with a separator 130 between them, wherein a protrusion direction of a positive electrode tab 111 and a protrusion direction of a negative electrode tab 121 are mutually opposite, and the negative electrode tab 121 includes a negative electrode shoulder line part 121a with a negative electrode mixture applied thereto and a negative electrode non-coated part 121b without a negative electrode mixture applied thereto, wherein the negative electrode shoulder line part 121a includes a negative electrode sliding region S' forming an inclined plane on the plane of the negative electrode current collector, with the thickness of the negative electrode mixture layer 122 decreasing along the protrusion direction of the negative electrode tab 121.

In general, electrode assemblies for lithium secondary batteries are managed to have an NP ratio of 1 or more to prevent lithium from precipitating during charge and discharge and to prevent rapid degradation of the battery, especially during high-rate charge and discharge. However, when the positive electrode and negative electrode include a sliding region, depending on the length of the sliding region, the inclined shape of the sliding (S-shaped or straight), and the slope, there may be a reversal of the NP ratio such that the NP ratio is less than 1 locally. Especially in the sliding region of the negative electrode, the risk of reversal of the NP ratio may be greater due to the relatively small thickness of the negative electrode mixture layer.

According to the invention, when notching the negative electrode from the negative electrode sheet, the negative electrode is manufactured by notching such that the negative electrode shoulder line part is included within the negative electrode tab. This means that the negative electrode sliding region is cut off when the negative electrode is notched. Accordingly, the length of the sliding region of the negative electrode mixture layer around the negative electrode upper end part 120T according to the present invention is shortened compared to the length of the sliding region of the negative electrode according to the prior art in which the negative electrode is notched so that the negative electrode shoulder line part is not present within the negative electrode tab. Therefore, the electrode assembly according to the present invention can reduce the risk of NP ratio reversal due to the shortened length of the sliding region of the negative electrode. Here, the length of the negative electrode sliding region refers to the length by which the negative electrode sliding region extends along the full-length direction (x-axis direction) of the negative electrode.

Referring to FIG. 4, in the electrode assembly 100, a area A where the lower end part 110B of the positive electrode and the upper end part 120T of the negative electrode from which the negative electrode tab 121 protrudes are facing each other, and a area B where the upper end part 110T of the positive electrode and the lower end part 120B of the negative electrode are facing each other are regions where the NP ratio reversal is likely to occur. And, among the facing areas A and B, the NP ratio reversal is more likely to occur in the facing area A where the lower end part of the positive electrode 110B and the upper end part of the negative electrode 120T are facing each other.

Referring to FIGS. 5 and 7, the length of the negative electrode sliding region AS' at the facing area A is longer than the length of the negative electrode sliding region BS' at the facing area B. This is because when the negative electrode sheet, which is the base material of the negative electrode, is notched into individual negative electrodes, the negative electrode shoulder line part located within the negative electrode tab includes the sliding region as it is, but the sliding region at the lower end part of the negative electrode is partially cut off. On the other hand, the length of the positive electrode sliding region AS at the facing area A is shorter than the length of the positive electrode sliding region BS at the facing area B. As a result, the negative electrode with a relatively long sliding region and the positive electrode with a relatively short sliding region are facing each other at facing area A. Therefore, the reversal of the NP ratio is more likely to occur at facing area A.

Accordingly, the electrode assembly according to the present invention is characterized in that it is designed to satisfy the following Condition 1 at facing area A. Specifically, the electrode assembly 100 has a first negative electrode thickness ratio $RT_{N1}(=T_{N1}/T_{NC})$, which is a ratio of the thickness $T_{N1}$ of the negative electrode mixture layer at the first face-to-face position where the negative electrode faces the lower end part of the positive electrode, to the thickness $T_{NC}$ of the negative electrode mixture layer at the center part of the negative electrode, and a first positive electrode thickness ratio $RT_{P1}(=T_{P1}/T_{PC})$, which is a ratio of the thickness $T_{P1}$ of the positive electrode mixture layer at the lower end part of the positive electrode, to the thickness $T_{PC}$ of the positive electrode mixture layer at the center part of the positive electrode satisfies Condition 1 below.

[Condition 1]

$$RT_{N1} \geq (RT_{P1} / \text{NP Ratio}) \times 100.1$$

(In condition 1, NP Ratio is a preset value, which means the ratio value of negative electrode capacity to positive electrode capacity per unit area)

The positive electrode and negative electrode are facing each other with a separator between them, and in order for the NP ratio inversion not to occur, the capacity of the negative electrode must be greater than the capacity of the positive electrode facing it. However, since it is difficult to measure the capacity of the positive electrode in the sliding region of the positive electrode and the capacity of the negative electrode in the sliding region of the negative electrode, respectively, it is easy to manage the NP Ratio by measuring the thickness of the positive electrode mixture layer and the thickness of the negative electrode mixture layer, respectively, instead of the capacity in the sliding region. This is because the capacity of the electrode is proportional to the thickness of the electrode mixture layer.

Even so, it is not practical to apply the method of managing the NP ratio to the mass production process by measuring the thickness of the positive electrode mixture layer and the thickness of the negative electrode mixture layer at all areas where the positive electrode and negative electrode face each other, respectively, and checking whether the NP ratio is met based on the measurements.

Therefore, in order to present an electrode assembly model in which NP ratio reversal does not occur, the present invention does not need to measure the thickness of the electrode mixture layer at all areas where the positive electrode and the negative electrode face each other, but calculate each value of the first negative electrode thickness ratio and the first positive electrode thickness ratio from the thickness of the positive electrode mixture layer and the thickness of the negative electrode mixture layer measured at a specific face-to-face position, thereby ensuring that the electrode assembly whose relationship satisfies Condition 1 does not have NP ratio reversal. And, the first face-to-face position P1, which is a thickness measurement position for calculating the thickness ratio, is specified as a position facing the lower end part 110 of the positive electrode in the negative electrode 120, and is specified as the lower end part 110B of the positive electrode in the case of the positive electrode 110, respectively.

In other words, the electrode assembly according to the present invention is an electrode assembly designed using a thickness ratio at the "first face-to-face position P1" where the positive electrode lower end part 110B and the negative electrode 120 face each other, and the risk of NP ratio reversal is prevented.

In the present invention, the NP Ratio is managed using the thickness ratio rather than the absolute value of the thickness, because the thickness ratio can further ensure the prevention of the risk of NP Ratio reversal. While the thickness of the positive electrode mixture layer or the thickness of the negative electrode mixture layer measured at a specific face-to-face position cannot determine the degree of sliding, the positive electrode thickness ratio or the negative electrode thickness ratio at a specific face-to-face position can determine the degree of sliding, so the method of managing the NP Ratio using the thickness ratio can further ensure the prevention of the risk of NP Ratio reversal.

In one particular example, the first positive electrode thickness ratio $RT_{P1}(=T_{P1}/T_{PC})$ may be from 0.6 to 1, and more particularly may be from 0.65 to 0.99; from 0.7 to 0.98; from 0.75 to 0.95; from 0.8 to 0.95. As for the lower end part 110B of the positive electrode at the facing area A, it is desirable to minimize the sliding region to increase the energy density of the positive electrode, and accordingly, the thickness ratio of the lower end part of the positive electrode, the first positive electrode thickness ratio, has the above numerical range.

Referring to FIG. 6, in one particular example, a ratio value of a length L1 of the negative electrode shoulder line part 121a, to a length L3, which is from the first face-to-face position P1 to an end part of the negative electrode shoulder line part, may be 0.5 to 0.9, and more specifically may be 0.65 to 0.8; 0.6 to 0.9; 0.7 to 0.9; 0.7 to 0.8. In terms of preventing NP ratio reversal, it is preferred that the negative electrode shoulder line part has a long length.

The electrode assembly 100 according to an exemplary embodiment of the present invention has a second negative electrode thickness ratio $RT_{N2}(=T_{N2}/T_{NC})$, which is a ratio of the thickness $T_{N2}$ of the negative electrode mixture layer at the second face-to-face position where the negative electrode faces the upper end part of the positive electrode, to the thickness $T_{NC}$ of the negative electrode mixture layer at the center part of the negative electrode, and a second positive electrode thickness ratio $RT_{P2}(=T_{P2}/T_{PC})$, which is a ratio of the thickness $T_{P2}$ of the positive electrode mixture layer at the upper end part of the positive electrode, to the thickness $T_{PC}$ of the positive electrode mixture layer at the center part of the positive electrode may satisfy Condition 2 below.

[Condition 2]

$$RT_{N2} \geq (RT_{P2} / \text{NP Ratio}) \times 100.1$$

(In condition 2, NP Ratio is a preset value, which means the ratio value of negative electrode capacity to positive electrode capacity per unit area)

Condition 2 above may be a condition to ensure that the risk of NP Ratio reversal at the facing area B is prevented. As described above, the probability of NP Ratio reversal at the facing area B is smaller than that at the facing area A, so the Condition 2 may be meaningful as an auxiliary measure of NP Ratio management.

Referring to FIGS. 7 and 8, the facing area B is an area where the positive electrode upper end part 110T and the negative electrode lower end part 120B face each other, and the positive electrode tab 111 may include a positive electrode shoulder line part 111a to which an positive electrode mixture 112 is applied on the current collector, and a positive electrode non-coated part 111b to which no positive electrode mixture is applied, wherein the positive electrode shoulder line part 111a may include a positive electrode sliding region S forming an inclined plane on the plane of the positive electrode current collector, with the thickness of the positive electrode mixture layer 112 decreasing along the protrusion direction of the positive electrode tab 111.

(Second embodiment)

In a second embodiment, the present invention provides a method of manufacturing an electrode assembly.

FIGS. 9 and 10 are flowcharts to illustrate a method of manufacturing an electrode assembly according to an exemplary embodiment of the present invention, and FIG. 11 is a drawing to illustrate a method of manufacturing an electrode assembly according to an exemplary embodiment of the present invention.

Referring to FIG. 9, a method of manufacturing an electrode assembly according to exemplary embodiments of the present invention includes: preparing an electrode sheet including an electrode mixture applied part and an electrode mixture non-applied part P110; measuring a thickness of each electrode mixture layer at a plurality of points selected at a boundary part of the electrode mixture applied part and electrode mixture non-applied part, and measuring a thickness of an electrode mixture layer at a center part of the electrode mixture applied part P120; calculating an electrode thickness ratio by calculating a ratio of a thickness of an electrode mixture layer at each of the plurality of points, to a thickness of an electrode mixture layer at a center part of the electrode mixture applied part P130; setting up a positive/negative electrode notching predetermined line that sets a notching predetermined line notching in the form of individual positive electrodes and individual negative electrodes, on positive electrode sheets and negative electrode sheets, based on calculated positive electrode thickness ratio values and negative electrode thickness ratio values P140; a notching process that notches according to the set notching predetermined line P150; and a lamination process of laminating by interposing a separator between the notched positive electrode and negative electrode, P160.

According to an exemplary embodiment of the present invention, prior to setting a notching predetermined line for the positive and negative electrodes, a plurality of points are selected at the boundary between the electrode mixture applied part and the electrode mixture non-applied part, and the thickness of the electrode mixture layer is measured at the selected plurality of points, and the respective thickness ratio at the selected plurality of points is calculated. Then, based on the calculated plurality of thickness ratio values, the electrode assembly is designed, so a localized NP ratio reversal in the electrode sliding region may be prevented.

Preparing the electrode sheet P110 may be a process of preparing an electrode sheet including, an electrode mixture applied part to which an electrode mixture is applied on an electrode current collector sheet, and an electrode mixture non-applied part to which an electrode mixture is not applied and is located at least at one edge of the electrode mixture applied part.

Specifically, the electrode sheet preparation process P110 may include preparing a negative electrode sheet and preparing a positive electrode sheet. The process of preparing these electrode sheets may be prepared by applying an electrode slurry including an electrode active material to a sheet-type current collector, and then drying and rolling.

Referring to FIG. 11, the negative electrode sheet 20 may include a negative electrode mixture applied part 22 with a negative electrode mixture applied thereto and a negative electrode mixture non-applied part 21 without a negative electrode mixture applied thereto. The negative electrode mixture non-applied part 21 may be located at either edge of the negative electrode mixture applied part relative to the width direction (x-axis direction) of the negative electrode sheet. However, it is not limited to this, and the negative electrode mixture non-applied part 21 may be located at one edge of the negative electrode mixture applied part 22. The positive electrode sheet 10, like the negative electrode sheet 20, also includes a positive electrode mixture applied part 12 with a positive electrode mixture applied thereto and a positive electrode mixture non-applied part 11 without a positive electrode mixture applied thereto, wherein the positive electrode mixture non-applied part 11 may be each located at either edge of the positive electrode mixture applied part 12, or may be located at one edge of the positive electrode mixture applied part 12.

The thickness measurement process P120 may include selecting a plurality of points at the boundary of the electrode mixture applied part and non-applied part, measuring the thickness of each electrode mixture layer at the selected points, and measuring the thickness of the electrode mixture layer at a center part of the electrode mixture applied part. Here, the boundary between the electrode mixture applied part and non-applied part may be a region where a sliding region exists.

The thickness measurement process P120 may include measuring a thickness of a positive electrode mixture layer on the positive electrode sheet and measuring a thickness of a negative electrode mixture layer on the negative electrode sheet.

Specifically, the process of measuring the thickness of the positive electrode mixture layer in the positive electrode sheet may include a process of measuring the thickness of the positive electrode mixture layer in the center part of the positive electrode sheet 10, and a process of randomly selecting a plurality of points in the area around the boundary of the positive electrode mixture applied part 12 and the positive electrode mixture non-applied part 21 including the sliding region in the positive electrode sheet 10, and measuring the thickness of each of the positive electrode mixture layers at those points. Here, the plurality of points may be selected at regular spacings along the width direction (x-axis direction) of the positive electrode sheet 10.

Furthermore, the process of measuring the thickness of the negative electrode mixture layer in the negative electrode sheet may include a process of measuring the thickness of the negative electrode mixture layer in the center part of the negative electrode sheet 20, and a process of randomly selecting a plurality of points in the region around the boundary of the negative electrode mixture applied part 22 and the negative electrode mixture non-applied part 21 including the sliding region in the negative electrode sheet 20, and measuring the thickness of each negative electrode mixture layer at those points. Here, the plurality of points may be selected at regular spacings along the width direction (x-axis direction) of the negative electrode sheet 20.

After the thickness measurement process P120, the thickness ratio calculation process P130 is performed. The thickness ratio calculation process may include a positive electrode thickness ratio calculation process and a negative electrode thickness ratio calculation process.

The positive electrode thickness ratio may be defined as a ratio value of the thickness of each positive electrode mixture layer at the plurality of points to the thickness $T_{PC}$ of the positive electrode mixture layer at the center part of the positive electrode composite application portion, and the negative electrode thickness ratio may be defined as a ratio value of the thickness of each negative electrode mixture layer at the plurality of points to the thickness $T_{NC}$ of the negative electrode mixture layer at the center part of the negative electrode mixture applied part. Thus, according to the thickness ratio calculation process P130, the respective positive electrode thickness ratio of the plurality of points and the respective negative electrode thickness ratio of the plurality of points may be calculated.

Setting the notching predetermined lines of the positive/negative electrode P140 may be a process of setting the positive electrode notching predetermined line to be notched in the form of individual positive electrodes 110 on the positive electrode sheet 10 and the negative electrode notching predetermined lines to be notched in the form of individual negative electrodes 120 on the negative electrode sheet 20, based on the positive electrode thickness ratio and the negative electrode thickness ratio calculated in above electrode thickness ratio calculation process P130.

In setting the notching predetermined line of the positive/negative electrode, since it is prior to laminating the positive electrode, negative electrode, and separator, it is not determined which part of the positive electrode sheet and which part of the negative electrode sheet are to be faced, and in such a state, it is not known whether the relationship between the negative electrode thickness ratio and the positive electrode thickness ratio satisfies Condition 3. Therefore, the process of setting the notching predetermined line of the positive/negative electrode P140 may include determining a part of the positive electrode sheet to be faced with the negative electrode, and determining a part of the negative electrode sheet to be faced with the positive electrode.

Referring to FIGS. 4 through 5 and FIG. 11, with reference to the x-axis direction, an upper part of the positive electrode sheet 10 may be notched with a positive electrode lower end part 110B, and a lower part of the positive electrode sheet 10 may be notched with a positive electrode tab 111 and a positive electrode upper end part 110T. In addition, the positive electrode lower end part 110B and the positive electrode upper end part 110T may be specific face-to-face positions of the positive electrode according to the present invention. That is, the positive electrode lower end part predetermined line may be a positive electrode first face-to-face predetermined line P3, and the positive electrode upper end part predetermined line may be a positive electrode second face-to-face predetermined line P4.

The positive electrode upper end part refers to the end of the positive electrode corner part with the positive electrode tab protruding, and the positive electrode lower end part refers to the end of the positive electrode corner part opposite the positive electrode corner part with the positive electrode tab protruding.

According to the present invention, the electrode assembly may be designed so that each positive electrode thickness ratio on the positive electrode first face-to-face predetermined line P3 and the positive electrode second face-to-face predetermined line P4 satisfies Condition 3. That is, among the plurality of positive electrode thickness ratio values calculated in the thickness ratio calculation process P130, a point having a positive electrode thickness ratio satisfying Condition 3 may be located on the positive electrode first face-to-face predetermined line P3 and the positive electrode second face-to-face predetermined line P4.

Referring to FIGS. 6 through 7 and FIG. 11, the negative electrode 120 is generally cut larger than the positive electrode 110, so that when the positive electrode 110 is superimposed on the negative electrode 120, a portion of the negative electrode 110 is visible around the periphery of the positive electrode 110. Based to the x-axis direction, an upper part of the negative electrode sheet 20 may be notched with a negative electrode tab 121 and a negative electrode upper end part 120T, and a lower part of the negative electrode sheet 20 may be notched with a negative electrode lower end part 120B. Then, a negative electrode first face-to-face predetermined line P1 may be set at the upper part of the negative electrode sheet 20, and a negative electrode second face-to-face predetermined line P2 may be set at the lower part of the negative electrode sheet 20.

Here, the upper end part of the negative electrode refers to the end of the negative electrode corner part from which the negative electrode tab protrudes, and the lower end part of the negative electrode refers to the end of the negative electrode corner part opposite the negative electrode corner part from which the negative electrode tab protrudes.

According to the present invention, the electrode assembly may be designed so that each negative electrode thickness ratio on the negative electrode first face-to-face predetermined line P1 and the negative electrode second face-to-face predetermined line P2 satisfies Condition 3. That is, among the plurality of negative electrode thickness ratio values calculated in the thickness ratio calculation process P130, a point having a negative electrode thickness ratio satisfying Condition 3 may be located on the negative electrode first face-to-face predetermined line P1 and the negative electrode second face-to-face predetermined line P2.

In the electrode assembly 100 assembled by the lamination process P160, the negative electrode first face-to-face predetermined line P1 and the positive electrode first face-to-face predetermined line P3 may be overlapped relative to the horizontal direction (x-y) of the electrode assembly. And the negative electrode second face-to-face predetermined line P2 and the positive electrode second face-to-face predetermined line P4 may be overlapped relative to the horizontal direction (x-y) of the electrode assembly.

Referring to FIGS. 10 and 11, the process of setting the positive and negative notching predetermined lines P140 according to an exemplary embodiment may include: determining a positive electrode first face-to-face predetermined line P3 on the positive electrode sheet 10 and a negative electrode first face-to-face predetermined line P1 on the negative electrode sheet 20 P141; determining the positive electrode first face-to-face predetermined line P3 as a positive electrode lower end part notching predetermined line P142; and determining a notching predetermined line of the negative electrode upper end part based on the negative electrode first face-to-face predetermined line P1, wherein the negative electrode first face-to-face predetermined line P1 and the positive electrode first face-to-face predetermined line P3 are determined such that the negative electrode thickness ratio at the negative electrode first face-to-face predetermined line P1 and the positive electrode thickness ratio at the positive electrode first face-to-face predetermined line P3 satisfy Condition 3 below.

[Condition 3]

$$\text{Negative electrode thickness ratio} \geq (\text{Positive electrode thickness ratio/ NP Ratio}) \times 100.1$$

(In condition 3, NP Ratio is a preset value, which means the ratio value of negative electrode capacity to positive electrode capacity per unit area)

In other words, among the plurality of negative electrode thickness ratio values, a point having a negative electrode thickness ratio satisfying Condition 3 may be determined as the negative electrode first face-to-face predetermined line P1, and among the plurality of positive electrode thickness ratio values, a point having an positive electrode thickness ratio satisfying Condition 3 may be determined as the positive electrode first face-to-face predetermined line P3.

Condition 3 is a criterion for ensuring prevention of NP Ratio reversal of the positive/negative electrodes in the sliding region, and the electrode assembly manufacturing method according to an exemplary embodiment of the present invention can set a notching predetermined line for the positive/negative electrodes based on a specific facing position satisfying Condition 3, and can ensure prevention of NP Ratio reversal by laminating the positive/negative electrodes. And, the electrode assembly manufactured accordingly can ensure prevention of NP Ratio reversal at facing area A where the lower end part 110B of the positive electrode and the upper end part 120T of the negative electrode from which the negative electrode tab 121 protrudes are facing.

According to an exemplary embodiment of the present invention, the process of setting the positive/negative notching predetermined line P140 may further include a process of making a table of a combination of positive electrode thickness ratio and negative electrode thickness ratio satisfying Condition 3 according to a preset NP Ratio value. In this case, it has the effect of facilitating determination of the positive electrode first and second face-to-face predetermined lines and the negative electrode first and second face-to-face predetermined lines satisfying Condition 3.

For example, if the NP Ratio is set to 108, a combination of the positive electrode thickness ratio and the negative electrode thickness ratio that satisfies Condition 3 can be generated as shown in Table 1. Then, according to the combination in Table 1, the positive electrode first and second face-to-face predetermined lines P3,P4 and the negative electrode first and second face-to-face predetermined lines P1,P2 that are the basis for the notching predetermined line can be determined.

[Table 1]

| Positive electrode Thickness Ratio | Negative electrode Thickness Ratio |
|---|---|
| 1 or less | 0.93 or more |
| 0.95 or less | 0.88 or more |
| 0.90 or less | 0.83 or more |
| 0.85 or less | 0.79 or more |
| 0.80 or less | 0.74 or more |
| 0.75 or less | 0.70 or more |
| 0.70 or less | 0.65 or more |

(continued)

| Positive electrode Thickness Ratio | Negative electrode Thickness Ratio |
|---|---|
| 0.65or less | 0.60 or more |
| 0.60 or less | 0.56 or more |

Referring to FIG. 11, in the negative electrode sheet 20, the notching predetermined line (dotted line of 120) of the negative electrode may be set larger than the size of the positive electrode (dotted line of 110) to be notched. And the notching predetermined line of the negative electrode tab may be located on one side of the negative electrode mixture applied part 22. And, a notching predetermined line of the negative electrode may be determined according to a length L1 of the negative electrode shoulder line part, a length A of the negative electrode in the full-length direction (x-axis direction), and a length W1 of the negative electrode in the full-width direction (y-axis direction).

In an exemplary embodiment, the full-length direction length A of the negative electrode and the width direction length W1 of the negative electrode may be preset lengths, and in determining the length L1 of the negative electrode shoulder line part 121a included within the negative electrode tab region, the length L1 of the negative electrode shoulder line part may be naturally determined based on the negative electrode first face-to-face predetermined line P1 satisfying Condition 3. Here, the length of the negative electrode shoulder line part may be defined as an extended length of the negative electrode shoulder line part 121a to which the negative electrode mixture is applied, in the negative electrode tab predetermined area.

Referring to FIG. 11, in the process of determining the notching predetermined line of the upper end part of the negative electrode P143, the notching predetermined line of the upper part of the negative electrode may be determined as an imaginary line connecting points spaced apart by a planar spacing G1 of the positive electrode and the negative electrode from the negative electrode first face-to-face predetermined line P1 along the width direction (x-axis direction) of the negative electrode sheet.

Referring to FIGS. 10 and 11, the positive electrode notching predetermined line 110 in the positive electrode sheet 10 may be set smaller than the size of the negative electrode 120 to be notched. And, the notching predetermined line of the positive electrode may be set such that a positive electrode tab 111 is formed on one side of the positive electrode mixture applied part 12. And, the notching predetermined line of the positive electrode may be determined according to a length L2 of the positive electrode shoulder line part, a length C of the full-length direction (x-axis direction) of the positive electrode, and a length W2 of the full-width direction (y-axis direction) of the positive electrode.

In an exemplary embodiment, the length C of the positive electrode in the full-length direction and the length W2 of the positive electrode in the full-width direction may be preset lengths, and in determining the length L2 of the positive electrode shoulder line part 111b included within the positive electrode tab region, the length L2 of the positive electrode shoulder line part may be naturally determined based on the positive electrode second face-to-face predetermined line P4 satisfying Condition 3.

According to an exemplary embodiment, the process of setting the positive/negative notching predetermined line P140 may further include determining a positive electrode second face-to-face predetermined line P4 on the positive electrode sheet and determining a negative electrode second face-to-face predetermined line P2 on the negative electrode sheet. At this time, the negative electrode second face-to-face predetermined line P2 and the positive electrode second face-to-face predetermined line P4 may be determined such that a negative electrode thickness ratio at the negative electrode second face-to-face predetermined line P2 and a positive electrode thickness ratio at the positive electrode second face-to-face predetermined line P4 satisfy Condition 3.

The electrode assembly manufactured accordingly can ensure prevention of NP Ratio reversal at the facing area B where the upper end part 110T of the positive electrode and the lower end part 120B of the negative electrode are facing each other. However, as described above, the likelihood of an NP Ratio reversal occurring is higher at the aforementioned facing area A than at the facing area B, so the process P144 of determining the second face-to-face predetermined line P2 may have the meaning of assisting the process of determining the first face-to-face predetermined line P1.

Referring to FIG. 11, the negative electrode second face-to-face predetermined line P2 may be determined as an imaginary line connecting points spaced apart by a full-length direction length C of the positive electrode from the negative electrode first face-to-face predetermined line P1 along the width direction of the negative electrode sheet.

In an exemplary embodiment, the process of setting the positive/negative electrodes notching predetermination line P140 may further include: determining a notching predetermination line for the positive electrode upper end part P145; and determining a notching predetermination line for the negative electrode lower end part P146.

Referring to FIG. 11, the notching predetermined line of the positive electrode upper end part may be determined as the positive electrode second face-to-face predetermined line P4, and the notching predetermined line of the negative electrode lower end part may be determined as an imaginary line connecting points spaced apart from the notching predetermined line of the negative electrode upper end part by a full-length direction length A along the width direction of the negative electrode sheet.

In an exemplary embodiment, the process of setting the positive/negative electrodes notching predetermined lines may further include a process of determining a positive electrode tab notching predetermined line and a negative electrode tab notching predetermined line P147. Referring to FIG. 11, the process of determining the positive electrode tab notching predetermined line and negative electrode tab notching predetermined line may be to set the positive electrode tab notching predetermined line to include a positive electrode shoulder line part 111a with a positive electrode mixture applied within the positive electrode tab 111, and to set the negative electrode tab notching predetermined line to include a negative electrode shoulder line part 121a with a negative electrode mixture applied within the negative electrode tab 121.

Specifically, the negative electrode shoulder line part 121a of the negative electrode tab 121 may be included in an inner region of the negative electrode tab 121 in a form extending from an imaginary line connecting points spaced apart by a predetermined positive electrode and negative electrode planar spacing G1 from the negative electrode first face-to-face predetermined line P1 toward the negative electrode tab non-coated part 121b. And, the boundary line of the negative electrode shoulder line part 121a and the negative electrode non-coated part 121b may coincide with the boundary line of the negative electrode mixture applied part 22 and the negative electrode mixture non-applied part 21 of the negative electrode sheet 20, which is the base material of the negative electrode 120.

In addition, the shoulder line part 111a of the positive electrode tab 111 may be included in an inner region of the positive electrode tab 111 in a form extending from the positive electrode second face-to-face predetermined line P4 toward the positive electrode tab non-coated part 111b. And the boundary line of the positive electrode shoulder line part 111a and the positive electrode non-coated part 111b may coincide with the boundary line of the positive electrode mixture applied part 12 and the positive electrode mixture non-applied part 11 of the positive electrode sheet 10, which is the base material of the positive electrode 110.

The notching process P150 may include a positive electrode notching process, wherein the positive electrode sheet 10 is notched along a notching predetermined line of the positive electrode established according to the above process to obtain an individual positive electrode 110, and a negative electrode notching process, wherein the negative electrode sheet 20 is notched along a notching predetermined line of the negative electrode established according to the above process to obtain an individual negative electrode 120.

The lamination process P160 may be a process of laminating by interposing a separator between the notched positive electrode and negative electrode.

The lamination process P160 may include laminating the positive electrode such that a positive electrode lower end part notching predetermined line of the notched positive electrode 110 is positioned on a first face-to-face notching predetermined line P1 of the notched negative electrode 120.

Furthermore, the lamination process P160 may include laminating the positive electrode such that a positive electrode upper end part notching predetermined line of the notched positive electrode 110 is positioned on a second face-to-face notching predetermined line P2 of the positive electrode of the notched negative electrode 120.

An electrode assembly manufacturing method according to exemplary embodiments of the present invention can manage electrode sliding standards in a standardized way by using a specific face-to-face position of the positive and negative electrodes and an electrode thickness ratio on an electrode sheet including a sliding region. In addition, management of the NP Ratio reversal of the electrode sliding region can be performed more simply, thereby improving production efficiency.

(Third embodiment)

The present invention provides a lithium secondary battery in a third embodiment. The lithium secondary battery according to exemplary embodiments of the present invention may include a single electrode assembly, or may include a stacked body with a plurality of stacked electrode assemblies.

According to an exemplary embodiment, the electrode assembly is an electrode assembly for a lithium secondary battery having a positive electrode and a negative electrode facing each other with a separator between them, wherein the protrusion direction of the positive electrode tab and the protrusion direction of the negative electrode tab are mutually opposite, wherein the negative electrode tab includes a negative electrode shoulder line part to which a negative electrode mixture is applied on the negative electrode current collector and a negative electrode non-coated part to which no negative electrode mixture is applied, wherein negative electrode shoulder line part includes a negative electrode sliding region forming an inclined plane to the negative electrode current collector plane as the thickness of the negative electrode mixture layer decreases along the protrusion direction of the negative electrode tab, wherein a first negative electrode thickness ratio $RT_{N1}(=T_{N1}/T_{NC})$, which is a ratio of the thickness $T_{N1}$ of the negative electrode mixture layer at the first face-to-face position where the negative electrode faces the lower end part of the positive electrode, to the thickness $T_{NC}$ of the negative electrode mixture layer at the center part of the negative electrode, and a first positive electrode thickness ratio $RT_{P1}(=T_{P1}/T_{PC})$, which is a ratio of the thickness $T_{P1}$ of the positive electrode mixture layer at the lower end part of the positive electrode, to the thickness $T_{PC}$ of the positive electrode mixture layer at the center part of the positive electrode may satisfy Condition 1 below.

[Condition 1]

$$RT_{N1} \geq (RT_{P1} / \text{NP Ratio}) \times 100.1$$

(In condition 1, NP Ratio is a preset value, which means the ratio value of negative electrode capacity to positive electrode capacity per unit area)

(Fourth embodiment)

The present invention provides a method for managing electrode sliding standards in a fourth embodiment.

FIG. 12 is a flowchart to illustrate a method for managing electrode sliding standards according to an exemplary embodiment of the present invention.

Referring to FIG. 12, a method of managing an electrode sliding standards according to an exemplary embodiment of the present invention is a method of managing an electrode sliding standards of electrode including a sliding region in which the thickness of the positive electrode mixture layer gradually decreases to form an inclined plane with respect to a current collector plane, including: measuring a thickness $T_{PC}$ of a positive electrode mixture layer at a center part of the positive electrode in the positive electrode sheet, and a thickness $T_{P1}$ of a positive electrode mixture layer at a predetermined portion of the lower end part of the positive electrode, respectively, and calculating a first positive electrode thickness ratio $RT_{P1}(=T_{P1}/T_{PC})$, which is a ratio value of $T_{P1}$ to $T_{PC}$, P210; determining a negative electrode first face-to-face predetermined line P1 to face the positive electrode lower end part predetermined portion in the negative electrode sheet P220; measuring a thickness $T_{NC}$ of a negative electrode mixture layer of the negative electrode center part in the negative electrode sheet, and a thickness $T_{N1}$ of a negative electrode mixture layer at the negative electrode first face-to-face predetermined line P1, respectively, and calculating a first negative electrode thickness ratio $RT_{N1}$ $(=T_{N1}/T_{NC})$, which is a ratio of $T_{N1}$ to $T_{NC}$, P230; and confirming whether the relationship between the first positive electrode thickness ratio $RT_{P1}$ and the first negative electrode thickness ratio $RT_{N1}$ satisfies Condition 1 P240.

[Condition 1]

$$RT_{N1} \geq (RT_{P1} / \text{NP Ratio}) \times 100.1$$

(In condition 1, NP Ratio is a preset value, which means the ratio value of negative electrode capacity to positive electrode capacity per unit area)

A method of managing an electrode sliding standards according to an exemplary embodiment may further include: measuring a thickness $T_{P2}$ of a positive electrode mixture layer at a predetermined portion of the positive electrode upper end part, and calculating a second positive electrode thickness ratio $RT_{P2}(=T_{P2}/T_{PC})$, which is a ratio of $T_{P2}$ to $T_{PC}$; determining a negative electrode second predetermined line P2 to face the positive electrode upper end part in the negative electrode sheet; measuring a thickness $T_{N2}$ of the negative electrode mixture layer at the second negative electrode face-to-face line P2, and calculating a second negative electrode thickness ratio $RT_{N2}(=T_{N2}/T_{NC})$, which is a ratio of $T_{N2}$ to $T_{NC}$; and confirming whether the relationship between the second positive electrode thickness ratio $RT_{P2}$ and the second negative electrode thickness ratio $RT_{N2}$ satisfies Condition 2 below.

[Condition 2]

$$RT_{N2} \geq (RT_{P2} / \text{NP Ratio}) \times 100.1$$

(In condition 2, NP Ratio is a preset value, which means the ratio value of negative electrode capacity to positive electrode capacity per unit area)

Referring to FIG. 11, in the process of determining the negative electrode first face-to-face predetermined line according to an exemplary embodiment, the negative electrode first face-to-face predetermined line P1 may be determined as an imaginary line connecting points spaced apart from the boundary line of the negative electrode mixture applied part and the negative electrode mixture non-applied part by a length L1 of the negative electrode shoulder line part plus a planar spacing G1 of the positive electrode and negative electrode along the width direction.

In addition, in the process of determining the negative electrode second face-to-face predetermined line according to an exemplary embodiment, the negative electrode second face-to-face predetermined line P2 may be determined as an imaginary line connecting points spaced apart by a full-length direction length C of the positive electrode from the negative electrode first face-to-face predetermined line P1 along the width direction.

A method of managing electrode sliding standards according to exemplary embodiments of the present invention can manage electrode sliding standards in a standardized manner using a specific face-to-face position of the positive/negative electrodes and an electrode thickness ratio in an electrode sheet including a sliding region.

Hereinafter, the present invention is described with reference to examples in accordance with the present invention, but only for a better understanding of the present invention, and the scope of the present invention is not limited thereto.

Example 1

A slurry for a negative electrode including artificial graphite, SBR binder, CMC viscosity agent, and carbon black is applied on copper foil, and a dried and rolled negative electrode sheet was prepared. A slurry for a positive electrode including $LiNi_{0.8}Co_{0.1}Mn_{0.1}O_2$, PVDF binder, and carbon black is applied on aluminum foil, and a dried and rolled positive electrode sheet was prepared.

A positive electrode full-length direction length, positive electrode full-width direction length, negative electrode full-length direction length, negative electrode full-width direction length, and planar spacing G1 of the upper end part of the negative electrode and the lower end part of the positive electrode are set so that the NP Ratio of the electrode assembly to be assembled is 108.

On the prepared negative electrode sheet, a plurality of measurement locations was randomly selected at the boundary of the negative electrode mixture applied part and negative electrode mixture non-applied part, and the thickness of each negative electrode mixture layer was measured at the selected plurality of points. And, the thickness of the negative electrode mixture layer in the center part of the negative electrode mixture applied part was also measured. Then, the negative electrode thickness ratio values, which are the ratio of the thickness of the negative electrode mixture layer at each of the plurality of points to the thickness of the negative electrode mixture layer in the negative electrode center part, were calculated.

For the prepared positive electrode sheets, same as the negative electrode sheets, the thickness of the positive electrode mixture layer was measured and the positive electrode thickness ratio values were calculated.

On the negative electrode sheet, a negative electrode first face-to-face predetermined line P1 with a negative electrode thickness ratio of 0.94 was determined, and on the positive electrode sheet, a positive electrode first face-to-face predetermined line P3 with a positive electrode thickness ratio of 0.99 was determined. Then, on the negative electrode sheet, a negative electrode second face-to-face predetermined line P2 with a negative electrode thickness ratio of 0.96 was determined, and on the positive electrode sheet, a positive electrode second face-to-face predetermined line P4 with a positive electrode thickness ratio of 0.94 was determined.

An imaginary line connecting the points spaced apart by a preset planar spacing G1 of the positive electrode and negative electrode from the negative electrode first face-to-face predetermined line P1 was determined as the notching predetermined line of the negative electrode upper end part. Then, an imaginary line connecting the points spaced apart by a preset full-length direction length A of the negative electrode from the negative electrode upper end part notching predetermined line was determined as the notching predetermined line of the negative electrode lower end part. Then, the positive electrode first face-to-face predetermined line P3 was determined as the notching predetermined line of the positive electrode lower end part, and the positive electrode second face-to-face predetermined line P4 was determined as the notching predetermined line of the positive electrode upper end part.

The electrode assembly manufacture was completed by notching the positive electrode and negative electrode along the notching predetermined line set above, and laminating the positive electrode so that the positive electrode lower end part notching predetermined line of the notched positive electrode is located on the negative electrode first face-to-face predetermined line P1 of the notched negative electrode, and the positive electrode upper end part notching predetermined line of the notched positive electrode 110 is located on the negative electrode second face-to-face predetermined line P2 of the notched negative electrode.

Example 2

In Example 1, when determining the negative electrode first and second predetermined lines and the positive electrode first and second predetermined lines, a negative electrode first face-to-face predetermined line P1 with a negative electrode thickness ratio of 0.89 was determined in the negative electrode sheet, and a positive electrode first face-to-face predetermined line P3 with a positive electrode thickness ratio of 0.94 was determined in the positive electrode sheet. Then, in the negative electrode sheet, a negative electrode second face-to-face predetermined line P2 with a negative electrode thickness ratio of 0.93 was determined, and in the positive electrode sheet, a positive electrode second face-to-face predetermined line P4 with a positive electrode thickness ratio of 0.90 was determined. Except for this, the electrode assembly was prepared by the same method as in Example 1.

Comparative Example 1

In Example 1, when determining the negative electrode first and second predetermined lines and the positive electrode first and second predetermined lines, a negative electrode first face-to-face predetermined line P1 with a negative electrode thickness ratio of 0.90 was determined in the negative electrode sheet, and a positive electrode first face-to-face predetermined line P3 with a positive electrode thickness ratio of 0.99 was determined in the positive electrode sheet. Then, in the negative electrode sheet, a negative electrode second face-to-face predetermined line P2 with a negative electrode thickness ratio of 0.85 was determined, and in the positive electrode sheet, a positive electrode second face-to-face predetermined line P4 with a positive electrode thickness ratio of 0.94 was determined. Except for this, the electrode assembly was prepared by the same method as in Example 1.

Comparative Example 2

In Example 1, when determining the negative electrode first and second predetermined lines and the positive electrode first and second predetermined lines, a negative electrode first face-to-face predetermined line P1 with a negative electrode thickness ratio of 0.80 was determined in the negative electrode sheet, and a positive electrode first face-to-face predetermined line P3 with a positive electrode thickness ratio of 0.94 was determined in the positive electrode sheet. Then, in the negative electrode sheet, a negative electrode second face-to-face predetermined line P2 with a negative electrode thickness ratio of 0.82 was determined, and in the positive electrode sheet, a positive electrode second face-to-face predetermined line P4 with a positive electrode thickness ratio of 0.90 was determined. Except for this, the electrode assembly was prepared by the same method as in Example 1.

Experimental Example: Observing Lithium Precipitation

Each of the electrode assemblies of the Examples and the Comparative Examples was stored in a pouch-type battery case made of a PP/Al/nylon laminated sheet, sealed by injecting an electrolyte, and an activation process was performed to manufacture a secondary battery.

After the manufactured secondary battery was subjected to 200 cycles of charge and discharge, the battery was disassembled to visually check whether lithium was precipitated from the negative electrode, and the results are shown in Table 1. In Table 1, Conditions 1, 2, and 3 are as described above, and "O" means that the condition is met or lithium is precipitated, and "X" means that the condition is not met or lithium is not precipitated.

[Table 2]

| | Whether Condition 1 is satisfied | Whether Condition 2 is satisfied | Whether Condition 3 is satisfied | Whether lithium precipitated |
|---|---|---|---|---|
| Example 1 | O | O | O | X |
| Example 2 | O | O | O | X |
| Comparative Example 1 | X | X | X | O |
| Comparative Example 2 | X | X | X | O |

As shown above, the electrode assembly manufactured by the method according to the example of the present invention satisfied Conditions 1, 2, and 3 and did not precipitate lithium from the negative electrode after 200 cycles of charge and discharge. On the other hand, lithium precipitation was observed in the secondary battery including the electrode assembly of the comparative example after 200 cycles of charge and discharge.

As described above, according to the present invention, by specifying a face-to-face position having a positive/negative electrode thickness ratio satisfying Condition 1 to Condition 3 and setting a notching predetermined line based on it, it is possible to easily prevent a local reversal of the NP ratio without changing the spacing of the preset positive/negative electrodes.

## Claims

1. An electrode assembly (100) for a lithium secondary battery, comprising a positive electrode (110) and a negative electrode (120) facing each other with a separator (130) between them, wherein the positive electrode (110) and the negative electrode (120) are notched along a positive electrode tab notching predetermined line and a negative electrode tab notching predetermined line respectively, thereby forming a protruding positive tab (111) and a protruding negative tab (121) respectively, wherein a protrusion direction of a positive electrode tab (111) is opposite to a protrusion direction of a negative electrode tab (121),

the negative electrode tab (121) comprises: a negative electrode shoulder line part (121a) in which a negative electrode mixture is applied on a negative electrode current collector and a negative electrode non-coated part (121b) in which a negative electrode mixture is not applied,
the negative electrode shoulder line part (121a) comprises: a negative electrode sliding region S' that forms an inclined plane to a plane of the negative electrode current collector as the thickness of the negative electrode mixture layer (122) decreases along the protrusion direction of the negative electrode tab (121);
wherein a first negative electrode thickness ratio $RT_{N1}(=T_{N1}/T_{NC})$ and a first positive electrode thickness ratio $RT_{P1}(=T_{P1}/T_{PC})$ satisfy Condition 1 below;
wherein the first negative electrode thickness ratio is a ratio of a thickness $T_{N1}$ of a negative electrode mixture layer (122) at a first face-to-face position where the negative electrode faces a lower end part (110B) of the positive electrode, which corresponds to the end of the positive electrode, opposite a part from which the positive electrode tab (111) protrudes, to a thickness $T_{NC}$ of the negative electrode mixture layer (122) at a center part of the negative electrode, which is a region excluding the sliding region S', and is a region of the negative electrode mixture layer in which the thickness of the negative electrode mixture layer is constant, and
wherein the first positive electrode thickness ratio is a ratio of a thickness $T_{P1}$ of a positive electrode mixture layer (112) at the lower end part (110B) of the positive electrode (110), to a thickness $T_{PC}$ of the positive electrode mixture layer (112) at a center part of the positive electrode (110), which is a region excluding a sliding region, and is a region of the positive electrode mixture layer in which the thickness of the positive electrode mixture layer is constant;

[Condition 1]

$$RT_{N1} \geq (RT_{P1} / \text{NP Ratio}) \times 100.1$$

wherein in the Condition 1, the NP Ratio is a ratio value of negative electrode capacity to positive electrode capacity per unit area, and is a preset value.

**2.** The electrode assembly (100) of claim 1, wherein

a second negative electrode thickness ratio $RT_{N2}(=T_{N2}/T_{NC})$ and a second positive electrode thickness ratio $RT_{P2}(=T_{P2}/T_{PC})$ satisfy Condition 2 below,
wherein the second negative electrode thickness ratio is a ratio of a thickness $T_{N2}$ of the negative electrode mixture layer (122) at the second face-to-face position where the negative electrode (120) faces an upper end part (110T) of the positive electrode (110), which corresponds to the end of the positive electrode from which the positive electrode tab (111) protrudes, to the thickness $T_{NC}$ of the negative electrode mixture layer (122) at the center part of the negative electrode (120), and
wherein the second positive electrode thickness ratio is a ratio of a thickness $T_{P2}$ of the positive electrode mixture layer (112) at the upper end part (110T) of the positive electrode (110), to the thickness $T_{PC}$ of the positive electrode mixture layer (112) at the center part of the positive electrode (110);

[Condition 2]

$$RT_{N2} \geq (RT_{P2} / \text{NP Ratio}) \times 100.1$$

wherein in the Condition 2, the NP Ratio is a ratio value of negative electrode capacity to positive electrode capacity per unit area, and is a preset value.

**3.** The electrode assembly (100) of claim 1, wherein
a ratio value of length L1 of the negative electrode shoulder line part (121a), to a length L3, which is from the first face-to-face position to an end part of the negative electrode shoulder line part (121a) is between 0.5 and 0.9.

**4.** The electrode assembly of claim 1, wherein the first positive electrode thickness ratio $RT_{P1}(=T_{P1}/T_{PC})$ is from 0.6 to 1.

**5.** The electrode assembly (100) of claim 2, wherein the positive electrode tab (111) of the positive electrode comprises a positive electrode shoulder line part (111a) with a positive electrode mixture applied on a positive electrode current collector, and a positive electrode non-coated part (111b) without a positive electrode mixture applied, and
wherein the positive electrode shoulder line part (111a) comprises a positive electrode sliding region wherein the thickness of the positive electrode mixture layer (112) decreases along the protrusion direction of the positive electrode tab (111), forming an inclined plane to a plane of the positive electrode current collector.

**6.** A lithium secondary battery comprising one or more electrode assemblies (100) according to claim 1.

**7.** An electrode assembly manufacturing method comprising:

preparing an electrode sheet comprising, an electrode mixture applied part to which an electrode mixture is applied on an electrode current collector sheet, and an electrode mixture non-applied part to which an electrode mixture is not applied and is located at least at one edge of the electrode mixture applied part;
a thickness measurement process comprising: measuring a thickness of each electrode mixture layer at a plurality of points selected at a boundary part of the electrode mixture applied part and electrode mixture non-applied part, and measuring a thickness of an electrode mixture layer at a center part of the electrode mixture applied part;
calculating an electrode thickness ratio comprising: calculating a ratio of a thickness of an electrode mixture layer at each of the plurality of points, to a thickness of an electrode mixture layer at a center part of the electrode mixture applied part;
**characterised in that** the method further comprises:

setting up a positive/negative electrode notching predetermined line that sets a notching predetermined line notching in the form of individual positive electrodes and individual negative electrodes, on positive electrode sheets (10) and negative electrode sheets (20), based on calculated positive electrode thickness ratio values and negative electrode thickness ratio values;
a notching process that notches according to the set notching predetermined line (110, 120); and
a lamination process of laminating by interposing a separator between the notched positive electrode and negative electrode, wherein
the positive/negative electrode notching predetermined line setting process comprises:

determining a positive electrode first face-to-face predetermined line P3 on the positive electrode sheet (10) and determining a negative electrode face-to-face predetermined line P1 on the negative electrode sheet (20);
determining the positive electrode first face-to-face predetermined line P3 as a positive electrode lower end part notching predetermined line (110); and
determining a negative electrode upper end part notching predetermined line (120) based on the negative electrode first face-to-face predetermined line P1, wherein
the negative electrode first face-to-face predetermined line P1 and the positive electrode first face-to-face predetermined line P3 are determined such that a negative electrode thickness ratio at the negative electrode first face-to-face predetermined line P1 and a positive electrode thickness ratio at the positive electrode first face-to-face predetermined line P3 satisfy Condition 3 below,

$$\text{Negative electrode thickness ratio} \geq (\text{Positive electrode thickness ratio/ NP Ratio}) \times 100.\ 1 \quad \text{[Condition 3]}$$

wherein in the Condition 3, the NP Ratio is a ratio value of negative electrode capacity to positive electrode capacity per unit area, and is a preset value,
and wherein the negative electrode notching predetermined line setting process further comprises determining a negative electrode tab notching predetermined line, wherein in determining the negative electrode tab notching predetermined line, the negative electrode tab notching predetermination line is set such that the negative electrode tab (121) includes a negative electrode shoulder line part (121a) with a negative electrode mixture applied thereto.

**8.** The electrode assembly manufacturing method of claim 7,
wherein the positive/negative electrode notching predetermined line setting process further comprises:
making a table of a combination of a positive electrode thickness ratio and a negative electrode thickness ratio satisfying the Condition 3 according to a preset NP Ratio value.

**9.** The electrode assembly manufacturing method of claim 7,

wherein in determining the negative electrode upper end part notching predetermined line (120),
the negative electrode upper end part notching predetermined line (120) is determined as an imaginary line connecting points spaced apart by a planar spacing G1 of the positive electrode and negative electrode from the negative electrode first face-to-face predetermined line along a width direction of the negative electrode sheet (20).

**10.** The electrode assembly manufacturing method of claim 7,
wherein the positive/negative electrode notching predetermined line setting process further comprises:

determining a positive electrode second face-to-face predetermined line P4 in the positive electrode sheet (10), and determining a negative electrode second face-to-face predetermined line P2 in the negative electrode sheet (20), wherein
the negative electrode second face-to-face predetermined line P2 and the positive electrode second face-to-face predetermined line P4 are determined such that a negative electrode thickness ratio at the negative electrode second face-to-face predetermined line P2 and a positive electrode thickness ratio at the positive electrode second face-to-face predetermined line P4 satisfy the Condition 3.

**11.** The electrode assembly manufacturing method of claim 10,
wherein the negative electrode second face-to-face predetermined line P2 is determined as an imaginary line connecting points spaced apart by a full-length direction length C of the positive electrode from the negative electrode first face-to-face predetermined line P1 along a width direction of the negative electrode sheet (20).

**12.** The electrode assembly manufacturing method of claim 10,
wherein the positive/negative electrode notching predetermined line setting process further comprises:

determining the positive electrode second face-to-face predetermined line P4 as a positive electrode upper end part predetermined line; and
determining an imaginary line connecting points spaced apart by a full-length direction length A of the negative electrode along a width direction of the negative electrode sheet (20) from the negative electrode upper end part notching predetermined line (120), as a negative electrode lower end part notching predetermined line (120).

**13.** The electrode assembly manufacturing method of claim 7,

wherein the positive electrode notching predetermined line setting process further comprises determining a positive electrode tab notching predetermined line,
wherein in determining the positive electrode tab notching predetermined line,
the positive electrode tab notching predetermination line is set such that the positive electrode tab (111) includes a positive electrode shoulder line part (111a) with a positive electrode mixture applied thereto.

**14.** The electrode assembly manufacturing method of claim 7, wherein the lamination process comprises laminating a positive electrode such that a positive electrode lower end part notching predetermined line of the notched positive electrode is located on a first face-to-face predetermined line of the notched negative electrode.

**15.** The electrode assembly manufacturing method of claim 7, wherein the lamination process comprises laminating a positive electrode such that a positive electrode upper end part notching predetermined line of the notched positive electrode is located on a second face-to-face predetermined line of the notched negative electrode.

**Patentansprüche**

**1.** Eine Elektrodenanordnung (100) für eine Lithiumsekundärbatterie, umfassend eine positive Elektrode (110) und eine negative Elektrode (120), die einander mit einem Separator (130) dazwischen gegenüberliegen, wobei die positive Elektrode (110) und die negative Elektrode (120) jeweils entlang einer vorbestimmten Kerblinie für eine positive Elektrodenlasche und einer vorbestimmten Kerblinie für eine negative Elektrodenlasche gekerbt sind, wodurch jeweils eine vorstehende positive Lasche (111) und eine vorstehende negative Lasche (121) gebildet werden, wobei eine Vorsprungsrichtung einer positiven Elektrodenlasche (111) einer Vorsprungsrichtung einer negativen Elektrodenlasche (121) entgegengesetzt ist,

die negative Elektrodenlasche (121) umfasst: einen Schulterlinienabschnitt der negativen Elektrode (121a), in dem ein Gemisch der negativen Elektrode auf einen Stromkollektor der negativen Elektrode aufgetragen ist, und einen unbeschichteten Teil der negativen Elektrode (121b), in dem kein Gemisch der negativen Elektrode aufgetragen ist,
der Schulterlinienabschnitt der negativen Elektrode (121a) umfasst: einen Gleitbereich der negativen Elektrode S', der eine geneigte Ebene zu einer Ebene des Stromkollektors der negativen Elektrode bildet, wenn die Dicke der Gemischschicht der negativen Elektrode (122) entlang der Vorsprungsrichtung der negativen Elektrodenlasche (121) abnimmt;
wobei ein erstes Dickenverhältnis der negativen Elektrode $RT_{N1}$ (=$T_{N1}/T_{NC}$) und ein erstes Dickenverhältnis der positiven Elektrode $RT_{P1}$(=$T_{P1}/T_{PC}$) die nachstehende Bedingung 1 erfüllen;
wobei das erste Dickenverhältnis der negativen Elektrode ein Verhältnis einer Dicke $T_{N1}$ einer Gemischschicht der negativen Elektrode (122) an einer ersten Gegenüberstellungsposition, wo die negative Elektrode einem unteren Endabschnitt (110B) der positiven Elektrode gegenüberliegt, der dem Ende der positiven Elektrode entspricht, gegenüber einem Teil, von dem die positive Elektrodenlasche (111) vorsteht, zu einer Dicke $T_{NC}$ der Gemischschicht der negativen Elektrode (122) an einem Mittelabschnitt der negativen Elektrode, der ein den Gleitbereich S' ausschließender Bereich ist und ein Bereich der Gemischschicht der negativen Elektrode ist, in dem die Dicke der Gemischschicht der negativen Elektrode konstant ist, und
wobei das erste Dickenverhältnis der positiven Elektrode ein Verhältnis einer Dicke $T_{P1}$ einer Gemischschicht der positiven Elektrode (112) am unteren Endabschnitt (110B) der positiven Elektrode (110) zu einer Dicke $T_{PC}$ der Gemischschicht der positiven Elektrode (112) an einem Mittelabschnitt der positiven Elektrode (110) ist, der ein einen Gleitbereich ausschließender Bereich ist und ein Bereich der Gemischschicht der positiven Elektrode ist, in dem die Dicke der Gemischschicht der positiven Elektrode konstant ist;

[Bedingung 1]

$$RT_{N1} \geq (RT_{P1}/\text{NP-Verhältnis}) \times 100{,}1$$

wobei in der Bedingung 1 das NP-Verhältnis ein Verhältniswert der Kapazität der negativen Elektrode zur Kapazität der positiven Elektrode pro Flächeneinheit ist, und ein voreingestellter Wert ist.

**2.** Die Elektrodenanordnung (100) nach Anspruch 1, wobei

ein zweites Dickenverhältnis der negativen Elektrode $RT_{N2}$(=$T_{N2}/T_{NC}$) und ein zweites Dickenverhältnis der positiven Elektrode $RT_{P2}$(=$T_{P2}/T_{PC}$) die nachstehende Bedingung 2 erfüllen,
wobei das zweite Dickenverhältnis der negativen Elektrode ein Verhältnis einer Dicke $T_{N2}$ der Gemischschicht der negativen Elektrode (122) an der zweiten Gegenüberstellungsposition, wo die negative Elektrode (120) einem oberen Endabschnitt (110T) der positiven Elektrode (110) gegenüberliegt, der dem Ende der positiven Elektrode entspricht, von dem die positive Elektrodenlasche (111) vorsteht, zur Dicke $T_{NC}$ der Gemischschicht der negativen Elektrode (122) am Mittelabschnitt der negativen Elektrode (120) ist, und
wobei das zweite Dickenverhältnis der positiven Elektrode ein Verhältnis einer Dicke $T_{P2}$ der Gemischschicht der positiven Elektrode (112) am oberen Endabschnitt (110T) der positiven Elektrode (110) zur Dicke $T_{PC}$ der Gemischschicht der positiven Elektrode (112) am Mittelabschnitt der positiven Elektrode (110) ist;

[Bedingung 2]

$$RT_{N2} \geq (RT_{P2}/\text{NP-Verhältnis}) \times 100{,}1$$

wobei in der Bedingung 2 das NP-Verhältnis ein Verhältniswert der Kapazität der negativen Elektrode zur Kapazität der positiven Elektrode pro Flächeneinheit ist und ein voreingestellter Wert ist.

3. Elektrodenanordnung (100) nach Anspruch 1, wobei ein Verhältniswert der Länge L1 des Schulterlinienabschnitts der negativen Elektrode (121a) zu einer Länge L3, die von der ersten Gegenüberstellungsposition zu einem Endabschnitt des Schulterlinienabschnitts der negativen Elektrode (121a) reicht, zwischen 0,5 und 0,9 liegt.

4. Elektrodenanordnung nach Anspruch 1, wobei das erste Dickenverhältnis der positiven Elektrode $RT_{P1}(=T_{P1}/T_{PC})$ von 0,6 bis 1 beträgt.

5. Elektrodenanordnung (100) nach Anspruch 2, wobei die positive Elektrodenlasche (111) der positiven Elektrode einen Schulterlinienabschnitt der positiven Elektrode (111a) mit einem auf einem Stromkollektor der positiven Elektrode aufgetragenen Gemisch der positiven Elektrode und einen unbeschichteten Teil der positiven Elektrode (111b) ohne aufgetragenes Gemisch der positiven Elektrode umfasst, und wobei der Schulterlinienabschnitt der positiven Elektrode (111a) einen Gleitbereich der positiven Elektrode umfasst, wobei die Dicke der Gemischschicht der positiven Elektrode (112) entlang der Vorsprungsrichtung der positiven Elektrodenlasche (111) abnimmt und eine geneigte Ebene zu einer Ebene des Stromkollektors der positiven Elektrode bildet.

6. Eine Lithiumsekundärbatterie, umfassend eine oder mehrere Elektrodenanordnungen (100) nach Anspruch 1.

7. Ein Herstellungsverfahren für eine Elektrodenanordnung, umfassend:

Herstellen einer Elektrodenfolie, umfassend einen Gemischauftragsabschnitt, auf den ein Elektrodengemisch auf eine Stromkollektorfolie der Elektrode aufgetragen wird, und einen Gemischnichtauftragsabschnitt, auf den kein Elektrodengemisch aufgetragen wird und der sich an mindestens einem Rand des Gemischauftragsabschnitts befindet;
einen Dickenmessprozess, umfassend: Messen einer Dicke jeder Elektrodengemischschicht an einer Vielzahl von ausgewählten Punkten an einem Grenzabschnitt des Gemischauftragsabschnitts und des Gemischnichtauftragsabschnitts und Messen einer Dicke einer Elektrodengemischschicht an einem Mittelabschnitt des Gemischauftragsabschnitts;
Berechnen eines Elektrodendickenverhältnisses, umfassend: Berechnen eines Verhältnisses einer Dicke einer Elektrodengemischschicht an jedem der Vielzahl von Punkten zu einer Dicke einer Elektrodengemischschicht an einem Mittelabschnitt des Gemischauftragsabschnitts;
**dadurch gekennzeichnet, dass** das Verfahren weiter umfasst:

Einrichten einer vorbestimmten Kerblinie für die positive/negative Elektrode, die eine vorbestimmte Kerblinie festlegt, die in Form von einzelnen positiven Elektroden und einzelnen negativen Elektroden auf positiven Elektrodenfolien (10) und negativen Elektrodenfolien (20) kerbt, basierend auf berechneten Werten des Dickenverhältnisses der positiven Elektrode und Werten des Dickenverhältnisses der negativen Elektrode;
einen Kerbprozess, der gemäß der festgelegten vorbestimmten Kerblinie (110, 120) kerbt; und
einen Laminierungsprozess des Laminierens durch Zwischenlegen eines Separators zwischen der gekerbten positiven Elektrode und der negativen Elektrode, wobei
der Prozess des Festlegens der vorbestimmten Kerblinie für die positive/negative Elektrode umfasst:

Bestimmen einer ersten vorbestimmten Gegenüberstellungslinie P3 der positiven Elektrode auf der positiven Elektrodenfolie (10) und Bestimmen einer vorbestimmten Gegenüberstellungslinie P1 der negativen Elektrode auf der negativen Elektrodenfolie (20);
Bestimmen der ersten vorbestimmten Gegenüberstellungslinie P3 der positiven Elektrode als eine vorbestimmte Kerblinie des unteren Endabschnitts der positiven Elektrode (110); und
Bestimmen einer vorbestimmten Kerblinie des oberen Endabschnitts der negativen Elektrode (120) basierend auf der ersten vorbestimmten Gegenüberstellungslinie P1 der negativen Elektrode, wobei die erste vorbestimmte Gegenüberstellungslinie P1 der negativen Elektrode und die erste vorbestimmte Gegenüberstellungslinie P3 der positiven Elektrode so bestimmt werden, dass ein Dickenverhältnis der negativen Elektrode an der ersten vorbestimmten Gegenüberstellungslinie P1 der negativen Elektrode und ein Dickenverhältnis der positiven Elektrode an der ersten vorbestimmten Gegenüberstellungslinie P3 der positiven Elektrode die nachstehende Bedingung 3 erfüllen,

[Bedingung 3]

$$\text{Dickenverhältnis der negativen Elektrode} \geq (\text{Dickenverhältnis der positiven Elektrode/NP-Verhältnis}) \times 100{,}1$$

wobei in der Bedingung 3 das NP-Verhältnis ein Verhältniswert der Kapazität der negativen Elektrode zur Kapazität der positiven Elektrode pro Flächeneinheit ist und ein voreingestellter Wert ist, und wobei der Prozess des Festlegens der vorbestimmten Kerblinie der negativen Elektrode ferner das Bestimmen einer vorbestimmten Kerblinie der negativen Elektrodenlasche umfasst, wobei beim Bestimmen der vorbestimmten Kerblinie der negativen Elektrodenlasche die Laschenkerb-Vorbestimmungslinie der negativen Elektrode so festgelegt wird, dass die negative Elektrodenlasche (121) einen Schulterlinienabschnitt der negativen Elektrode (121a) mit einem darauf aufgetragenen Gemisch der negativen Elektrode enthält.

**8.** Herstellungsverfahren für eine Elektrodenanordnung nach Anspruch 7, wobei der Prozess des Festlegens der vorbestimmten Kerblinie der positiven/negativen Elektrode ferner umfasst: Erstellen einer Tabelle einer Kombination aus einem Dickenverhältnis der positiven Elektrode und einem Dickenverhältnis der negativen Elektrode, die die Bedingung 3 gemäß einem voreingestellten NP-Verhältniswert erfüllen.

**9.** Herstellungsverfahren für eine Elektrodenanordnung nach Anspruch 7, wobei beim Bestimmen der vorbestimmten Kerblinie des oberen Endabschnitts der negativen Elektrode (120) die vorbestimmte Kerblinie des oberen Endabschnitts der negativen Elektrode (120) als eine imaginäre Linie bestimmt wird, die Punkte verbindet, die durch einen planaren Abstand G1 der positiven Elektrode und der negativen Elektrode von der ersten vorbestimmten Gegenüberstellungslinie der negativen Elektrode entlang einer Breitenrichtung der negativen Elektrodenfolie (20) beabstandet sind.

**10.** Herstellungsverfahren für eine Elektrodenanordnung nach Anspruch 7, wobei der Prozess des Festlegens der vorbestimmten Kerblinie der positiven/negativen Elektrode ferner umfasst:

Bestimmen einer zweiten vorbestimmten Gegenüberstellungslinie P4 der positiven Elektrode in der positiven Elektrodenfolie (10) und Bestimmen einer zweiten vorbestimmten Gegenüberstellungslinie P2 der negativen Elektrode in der negativen Elektrodenfolie (20), wobei
die zweite vorbestimmte Gegenüberstellungslinie P2 der negativen Elektrode und die zweite vorbestimmte Gegenüberstellungslinie P4 der positiven Elektrode so bestimmt werden, dass ein Dickenverhältnis der negativen Elektrode an der zweiten vorbestimmten Gegenüberstellungslinie P2 der negativen Elektrode und ein Dickenverhältnis der positiven Elektrode an der zweiten vorbestimmten Gegenüberstellungslinie P4 der positiven Elektrode die Bedingung 3 erfüllen.

**11.** Herstellungsverfahren für eine Elektrodenanordnung nach Anspruch 10, wobei die zweite vorbestimmte Gegenüberstellungslinie P2 der negativen Elektrode als eine imaginäre Linie bestimmt wird, die Punkte verbindet, die durch eine Länge C in voller Längsrichtung der positiven Elektrode von der ersten vorbestimmten Gegenüberstellungslinie P1 der negativen Elektrode entlang einer Breitenrichtung der negativen Elektrodenfolie (20) beabstandet sind.

**12.** Herstellungsverfahren für eine Elektrodenanordnung nach Anspruch 10, wobei der Prozess des Festlegens der vorbestimmten Kerblinie der positiven/negativen Elektrode ferner umfasst:

Bestimmen der zweiten vorbestimmten Gegenüberstellungslinie P4 der positiven Elektrode als eine vorbestimmte Linie des oberen Endabschnitts der positiven Elektrode; und
Bestimmen einer imaginären Linie, die Punkte verbindet, die durch eine Länge A in voller Längsrichtung der negativen Elektrode entlang einer Breitenrichtung der negativen Elektrodenfolie (20) von der vorbestimmten Kerblinie des oberen Endabschnitts der negativen Elektrode (120) beabstandet sind, als eine vorbestimmte Kerblinie des unteren Endabschnitts der negativen Elektrode (120).

**13.** Herstellungsverfahren für eine Elektrodenanordnung nach Anspruch 7, wobei der Prozess des Festlegens der vorbestimmten Kerblinie der positiven Elektrode ferner das Bestimmen einer vorbestimmten Kerblinie für die positive Elektrodenlasche umfasst, wobei beim Bestimmen der vorbestimmten Kerblinie für die positive Elektrodenlasche, die Laschenkerb-Vorbestimmungslinie der positiven Elektrode so festgelegt wird dass die positive Elektrodenlasche (111) einen Schulterlinienabschnitt der positiven Elektrode (111a) mit einem darauf aufgetragenen Gemisch der positiven Elektrode enthält.

**14.** Herstellungsverfahren für eine Elektrodenanordnung nach Anspruch 7, wobei der Laminierungsprozess das Laminieren einer positiven Elektrode umfasst, so dass eine vorbestimmte Kerblinie des unteren Endabschnitts der positiven Elektrode der gekerbten positiven Elektrode auf einer ersten vorbestimmten Gegenüberstellungslinie der gekerbten negativen Elektrode liegt.

**15.** Herstellungsverfahren für eine Elektrodenanordnung nach Anspruch 7, wobei der Laminierungsprozess das Laminieren einer positiven Elektrode umfasst, so dass eine vorbestimmte Kerblinie des oberen Endabschnitts der positiven Elektrode der gekerbten positiven Elektrode auf einer zweiten vorbestimmten Gegenüberstellungslinie der gekerbten negativen Elektrode liegt.

## Revendications

**1.** Ensemble d'électrodes (100) pour une batterie secondaire au lithium, comprenant une électrode positive (110) et une électrode négative (120) se faisant face avec un séparateur (130) entre elles, dans lequel l'électrode positive (110) et l'électrode négative (120) sont découpées le long d'une ligne de découpe prédéterminée de languette d'électrode positive et d'une ligne de découpe prédéterminée de languette d'électrode négative respectivement, formant ainsi une languette positive saillante (111) et une languette négative saillante (121) respectivement, dans lequel une direction de saillie d'une languette d'électrode positive (111) est opposée à une direction de saillie d'une languette d'électrode négative (121),

la languette d'électrode négative (121) comprend : une partie de ligne d'épaulement d'électrode négative (121a) dans laquelle un mélange d'électrode négative est appliqué sur un collecteur de courant d'électrode négative et une partie non revêtue d'électrode négative (121b) dans laquelle un mélange d'électrode négative n'est pas appliqué,
la partie de ligne d'épaulement d'électrode négative (121a) comprend : une région de glissement d'électrode négative S' qui forme un plan incliné par rapport à un plan du collecteur de courant d'électrode négative à mesure que l'épaisseur de la couche de mélange d'électrode négative (122) diminue le long de la direction de saillie de la languette d'électrode négative (121) ;
dans lequel un premier rapport d'épaisseur d'électrode négative $RT_{N1}(=T_{N1}/T_{NC})$ et un premier rapport d'épaisseur d'électrode positive $RT_{P1}(=T_{P1}/T_{PC})$ satisfont la Condition 1 ci-dessous ;
dans lequel le premier rapport d'épaisseur d'électrode négative est un rapport d'une épaisseur $T_{N1}$ d'une couche de mélange d'électrode négative (122) à une première position en vis-à-vis où l'électrode négative fait face à une partie d'extrémité inférieure (110B) de l'électrode positive, qui correspond à l'extrémité de l'électrode positive, opposée à une partie à partir de laquelle la languette d'électrode positive (111) fait saillie, sur une épaisseur $T_{NC}$ de la couche de mélange d'électrode négative (122) à une partie centrale de l'électrode négative, qui est une région excluant la région de glissement S', et est une région de la couche de mélange d'électrode négative dans laquelle l'épaisseur de la couche de mélange d'électrode négative est constante, et
dans lequel le premier rapport d'épaisseur d'électrode positive est un rapport d'une épaisseur $T_{P1}$ d'une couche de mélange d'électrode positive (112) à la partie d'extrémité inférieure (110B) de l'électrode positive (110), sur une épaisseur $T_{PC}$ de la couche de mélange d'électrode positive (112) à une partie centrale de l'électrode positive (110), qui est une région excluant une région de glissement, et est une région de la couche de mélange d'électrode positive dans laquelle l'épaisseur de la couche de mélange d'électrode positive est constante ;

[Condition 1]

$$RT_{N1} \geq (RT_{P1}/\text{rapport NP}) \times 100{,}1$$

dans lequel, dans la Condition 1, le rapport NP est une valeur de rapport de la capacité de l'électrode négative à la capacité de l'électrode positive par unité de surface, et est une valeur prédéfinie.

**2.** Ensemble d'électrodes (100) selon la revendication 1, dans lequel

un second rapport d'épaisseur d'électrode négative $RT_{N2}(=T_{N2}/T_{NC})$ et un second rapport d'épaisseur d'électrode positive $RT_{P2}(=T_{P2}/T_{PC})$ satisfont la Condition 2 ci-dessous,

dans lequel le second rapport d'épaisseur d'électrode négative est un rapport d'une épaisseur $T_{N2}$ de la couche de mélange d'électrode négative (122) à la seconde position en vis-à-vis où l'électrode négative (120) fait face à une partie d'extrémité supérieure (110T) de l'électrode positive (110), qui correspond à l'extrémité de l'électrode positive à partir de laquelle la languette d'électrode positive (111) fait saillie, sur l'épaisseur $T_{NC}$ de la couche de mélange d'électrode négative (122) à la partie centrale de l'électrode négative (120), et
dans lequel le second rapport d'épaisseur d'électrode positive est un rapport d'une épaisseur $T_{P2}$ de la couche de mélange d'électrode positive (112) à la partie d'extrémité supérieure (110T) de l'électrode positive (110), sur l'épaisseur $T_{PC}$ de la couche de mélange d'électrode positive (112) à la partie centrale de l'électrode positive (110) ;

[Condition 2]

$$RT_{N2} \geq (RT_{P2}/\text{rapport NP}) \times 100{,}1$$

dans lequel, dans la Condition 2, le rapport NP est une valeur de rapport de la capacité de l'électrode négative à la capacité de l'électrode positive par unité de surface, et est une valeur prédéfinie.

**3.** Ensemble d'électrodes (100) selon la revendication 1, dans lequel une valeur de rapport de la longueur L1 de la partie de ligne d'épaulement d'électrode négative (121a), à une longueur L3, qui va de la première position en vis-à-vis à une partie d'extrémité de la partie de ligne d'épaulement d'électrode négative (121a) est comprise entre 0,5 et 0,9.

**4.** Ensemble d'électrodes selon la revendication 1, dans lequel le premier rapport d'épaisseur d'électrode positive $RT_{P1}$ ($=T_{P1}/T_{PC}$) est de 0,6 à 1.

**5.** Ensemble d'électrodes (100) selon la revendication 2, dans lequel la languette d'électrode positive (111) de l'électrode positive comprend une partie de ligne d'épaulement d'électrode positive (111a) avec un mélange d'électrode positive appliqué sur un collecteur de courant d'électrode positive, et une partie non revêtue d'électrode positive (111b) sans mélange d'électrode positive appliqué, et dans lequel la partie de ligne d'épaulement d'électrode positive (111a) comprend une région de glissement d'électrode positive dans laquelle l'épaisseur de la couche de mélange d'électrode positive (112) diminue le long de la direction de saillie de la languette d'électrode positive (111), formant un plan incliné par rapport à un plan du collecteur de courant d'électrode positive.

**6.** Batterie secondaire au lithium comprenant un ou plusieurs ensembles d'électrodes (100) selon la revendication 1.

**7.** Procédé de fabrication d'un ensemble d'électrodes comprenant :

la préparation d'une feuille d'électrode comprenant, une partie sur laquelle le mélange est appliqué, sur laquelle un mélange d'électrode est appliqué sur une feuille de collecteur de courant d'électrode, et une partie sur laquelle le mélange n'est pas appliqué, sur laquelle un mélange d'électrode n'est pas appliqué et qui est située à au moins un bord de la partie sur laquelle le mélange est appliqué ;
un processus de mesure d'épaisseur comprenant : la mesure d'une épaisseur de chaque couche de mélange d'électrode en une pluralité de points sélectionnés à une partie de délimitation de la partie sur laquelle le mélange est appliqué et de la partie sur laquelle le mélange n'est pas appliqué, et la mesure d'une épaisseur d'une couche de mélange d'électrode à une partie centrale de la partie sur laquelle le mélange est appliqué ;
le calcul d'un rapport d'épaisseur d'électrode comprenant : le calcul d'un rapport d'une épaisseur d'une couche de mélange d'électrode en chacun de la pluralité de points, à une épaisseur d'une couche de mélange d'électrode à une partie centrale de la partie sur laquelle le mélange est appliqué ;
**caractérisé en ce que** le procédé comprend en outre :

l'établissement d'une ligne de découpe prédéterminée d'électrode positive/négative qui définit une ligne de découpe prédéterminée découpant sous la forme d'électrodes positives individuelles et d'électrodes négatives individuelles, sur des feuilles d'électrode positive (10) et des feuilles d'électrode négative (20), sur la base des valeurs de rapport d'épaisseur d'électrode positive et des valeurs de rapport d'épaisseur d'électrode négative calculées ;
un processus de découpe qui découpe selon la ligne de découpe prédéterminée définie (110, 120) ; et
un processus de laminage consistant à laminer en interposant un séparateur entre l'électrode positive et l'électrode négative découpées, dans lequel
le processus de définition de la ligne de découpe prédéterminée d'électrode positive/négative comprend :

la détermination d'une première ligne prédéterminée en vis-à-vis d'électrode positive P3 sur la feuille d'électrode positive (10) et la détermination d'une ligne prédéterminée en vis-à-vis d'électrode négative P1 sur la feuille d'électrode négative (20) ;
la détermination de la première ligne prédéterminée en vis-à-vis d'électrode positive P3 en tant que ligne de découpe prédéterminée de partie d'extrémité inférieure d'électrode positive (110) ; et
la détermination d'une ligne de découpe prédéterminée de partie d'extrémité supérieure d'électrode négative (120) sur la base de la première ligne prédéterminée en vis-à-vis d'électrode négative P1, dans lequel
la première ligne prédéterminée en vis-à-vis d'électrode négative P1 et la première ligne prédéterminée en vis-à-vis d'électrode positive P3 sont déterminées de telle sorte qu'un rapport d'épaisseur d'électrode négative à la première ligne prédéterminée en vis-à-vis d'électrode négative P1 et un rapport d'épaisseur d'électrode positive à la première ligne prédéterminée en vis-à-vis d'électrode positive P3 satisfont la Condition 3 ci-dessous,

[Condition 3]

$$\text{rapport d'épaisseur d'électrode négative} \geq (\text{rapport d'épaisseur d'électrode positive}/\text{rapport NP}) \times 100{,}1$$

dans lequel, dans la Condition 3, le rapport NP est une valeur de rapport de la capacité de l'électrode négative à la capacité de l'électrode positive par unité de surface, et est une valeur prédéfinie, et dans lequel le processus de définition de la ligne de découpe prédéterminée d'électrode négative comprend en outre la détermination d'une ligne de découpe prédéterminée de languette d'électrode négative, dans lequel, lors de la détermination de la ligne de découpe prédéterminée de languette d'électrode négative, la ligne de prédétermination de découpe de languette d'électrode négative est définie de telle sorte que la languette d'électrode négative (121) comprend une partie de ligne d'épaulement d'électrode négative (121a) avec un mélange d'électrode négative appliqué sur celle-ci.

**8.** Procédé de fabrication d'un ensemble d'électrodes selon la revendication 7, dans lequel le processus de définition de la ligne de découpe prédéterminée d'électrode positive/négative comprend en outre : la réalisation d'une table d'une combinaison d'un rapport d'épaisseur d'électrode positive et d'un rapport d'épaisseur d'électrode négative satisfaisant la Condition 3 selon une valeur de rapport NP prédéfinie.

**9.** Procédé de fabrication d'un ensemble d'électrodes selon la revendication 7, dans lequel, lors de la détermination de la ligne de découpe prédéterminée de la partie d'extrémité supérieure d'électrode négative (120), la ligne de découpe prédéterminée de la partie d'extrémité supérieure d'électrode négative (120) est déterminée comme une ligne imaginaire reliant des points espacés d'un espacement planaire G1 de l'électrode positive et de l'électrode négative à partir de la première ligne prédéterminée en vis-à-vis d'électrode négative le long d'une direction de la largeur de la feuille d'électrode négative (20).

**10.** Procédé de fabrication d'un ensemble d'électrodes selon la revendication 7, dans lequel le processus de définition de la ligne de découpe prédéterminée d'électrode positive/négative comprend en outre :

la détermination d'une seconde ligne prédéterminée en vis-à-vis d'électrode positive P4 dans la feuille d'électrode positive (10), et la détermination d'une seconde ligne prédéterminée en vis-à-vis d'électrode négative P2 dans la feuille d'électrode négative (20), dans lequel
la seconde ligne prédéterminée en vis-à-vis d'électrode négative P2 et la seconde ligne prédéterminée en vis-à-vis d'électrode positive P4 sont déterminées de telle sorte qu'un rapport d'épaisseur d'électrode négative à la seconde ligne prédéterminée en vis-à-vis d'électrode négative P2 et un rapport d'épaisseur d'électrode positive à la seconde ligne prédéterminée en vis-à-vis d'électrode positive P4 satisfont la Condition 3.

**11.** Procédé de fabrication d'un ensemble d'électrodes selon la revendication 10, dans lequel la seconde ligne prédéterminée en vis-à-vis d'électrode négative P2 est déterminée comme une ligne imaginaire reliant des points espacés d'une longueur C dans le sens de la pleine longueur de l'électrode positive à partir de la première ligne prédéterminée en vis-à-vis d'électrode négative P1 le long d'une direction de la largeur de la feuille d'électrode négative (20).

**12.** Procédé de fabrication d'un ensemble d'électrodes selon la revendication 10, dans lequel le processus de définition de la ligne de découpe prédéterminée d'électrode positive/négative comprend en outre :

la détermination de la seconde ligne prédéterminée en vis-à-vis d'électrode positive P4 en tant que ligne prédéterminée de partie d'extrémité supérieure d'électrode positive ; et
la détermination d'une ligne imaginaire reliant des points espacés d'une longueur A dans le sens de la pleine longueur de l'électrode négative le long d'une direction de la largeur de la feuille d'électrode négative (20) à partir de la ligne de découpe prédéterminée de la partie d'extrémité supérieure de l'électrode négative (120), en tant que ligne de découpe prédéterminée de la partie d'extrémité inférieure de l'électrode négative (120).

**13.** Procédé de fabrication d'un ensemble d'électrodes selon la revendication 7, dans lequel le processus de définition de la ligne de découpe prédéterminée d'électrode positive comprend en outre la détermination d'une ligne de découpe prédéterminée de languette d'électrode positive, dans lequel, lors de la détermination de la ligne de découpe prédéterminée de languette d'électrode positive, la ligne de prédétermination de découpe de languette d'électrode positive est définie de telle sorte que la languette d'électrode positive (111) comprend une partie de ligne d'épaulement d'électrode positive (111a) avec un mélange d'électrode positive appliqué sur celle-ci.

**14.** Procédé de fabrication d'un ensemble d'électrodes selon la revendication 7, dans lequel le processus de laminage comprend le laminage d'une électrode positive de telle sorte qu'une ligne de découpe prédéterminée de la partie d'extrémité inférieure d'électrode positive de l'électrode positive découpée est située sur une première ligne prédéterminée en vis-à-vis de l'électrode négative découpée.

**15.** Procédé de fabrication d'un ensemble d'électrodes selon la revendication 7, dans lequel le processus de laminage comprend le laminage d'une électrode positive de telle sorte qu'une ligne de découpe prédéterminée de la partie d'extrémité supérieure d'électrode positive de l'électrode positive découpée est située sur une seconde ligne prédéterminée en vis-à-vis de l'électrode négative découpée.

[FIG. 1]

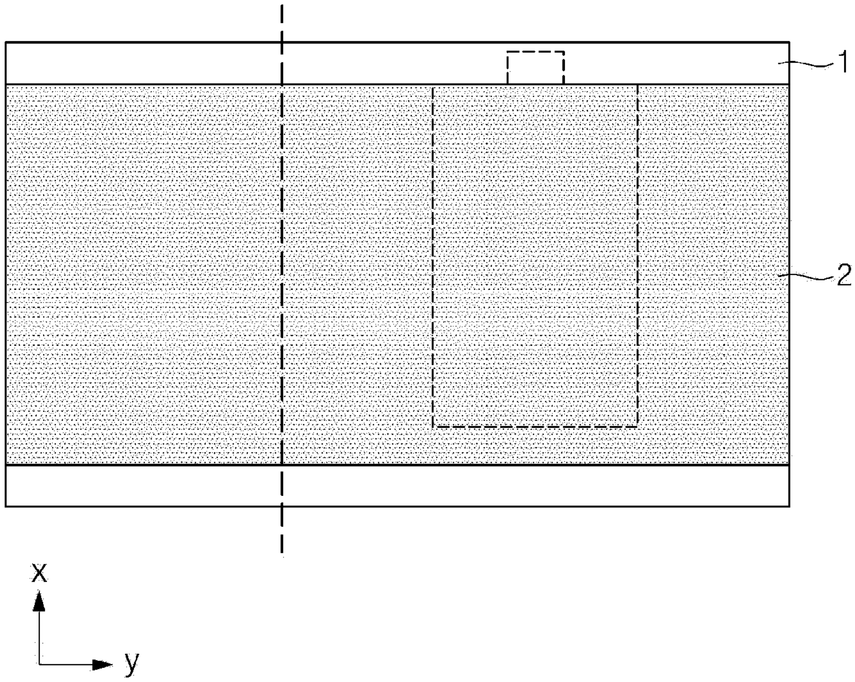


[FIG. 2]

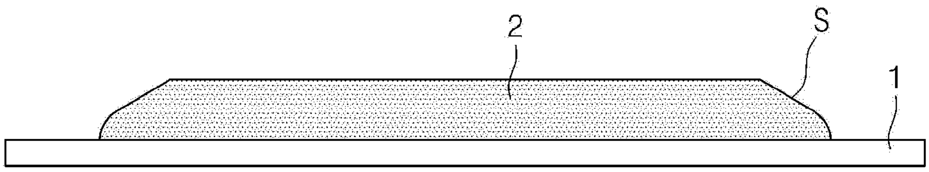

[FIG. 3]

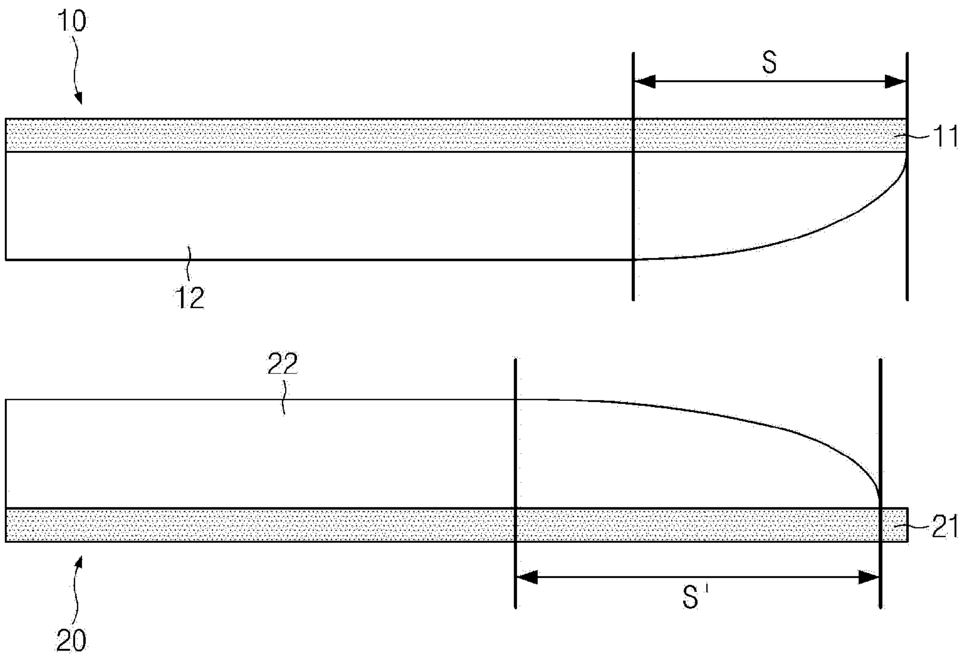
10
S
11
12
22
21
20
S'

[FIG. 4]

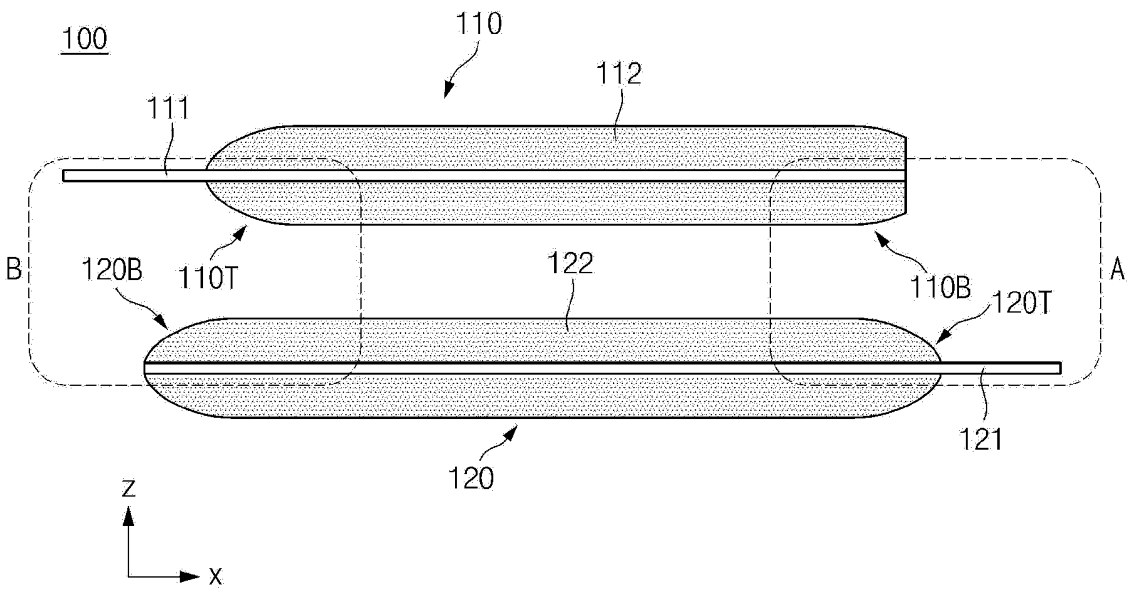
100
110
112
111
B
120B
110T
122
110B
120T
A
121
120
z
x

[FIG. 5]

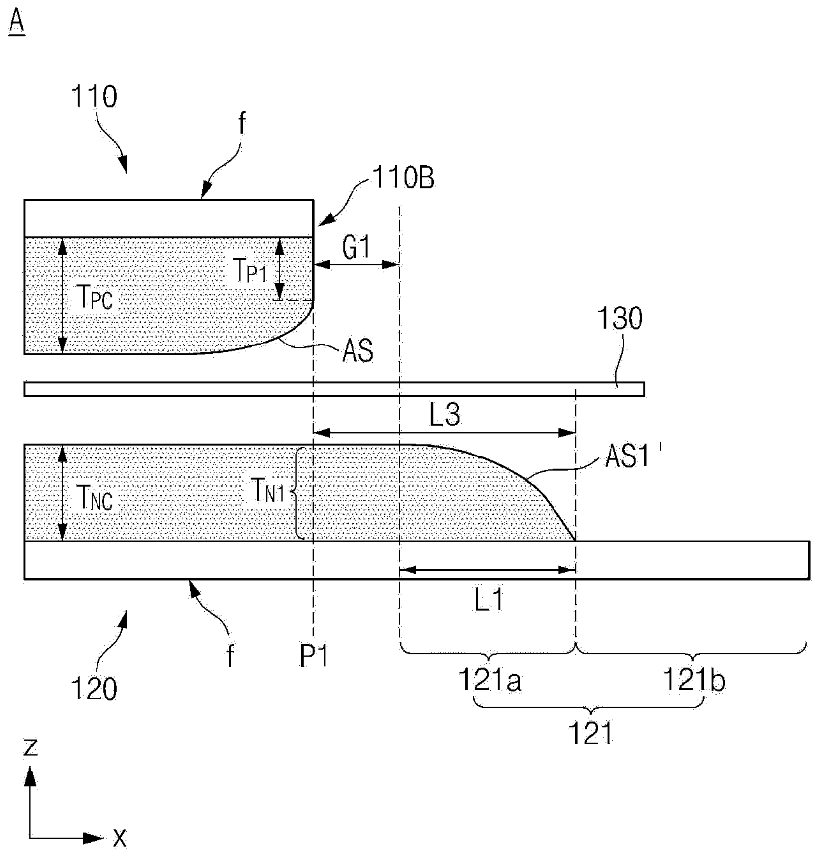
A
110
f
110B
G1
TP1
TPC
AS
130
L3
AS1'
TNC
TN1
L1
f
P1
120
121a
121b
121
z
x

[FIG. 6]

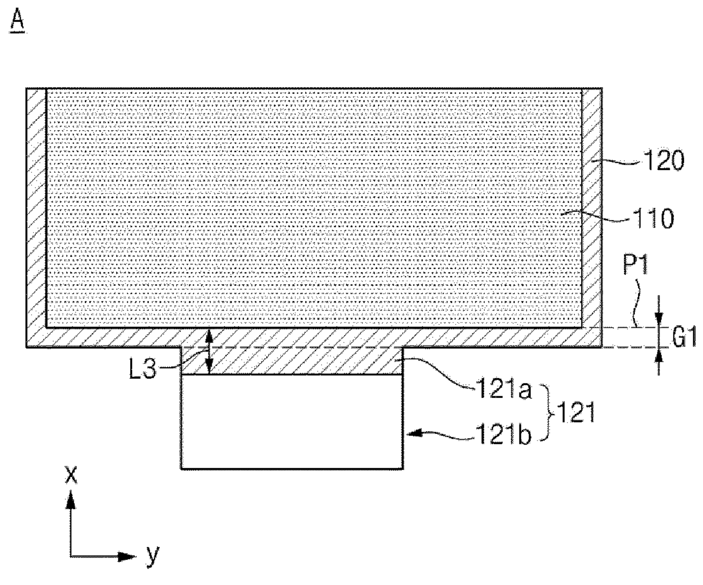
A
120
110
P1
G1
L3
121a
121b
121
x
y

[FIG. 7]

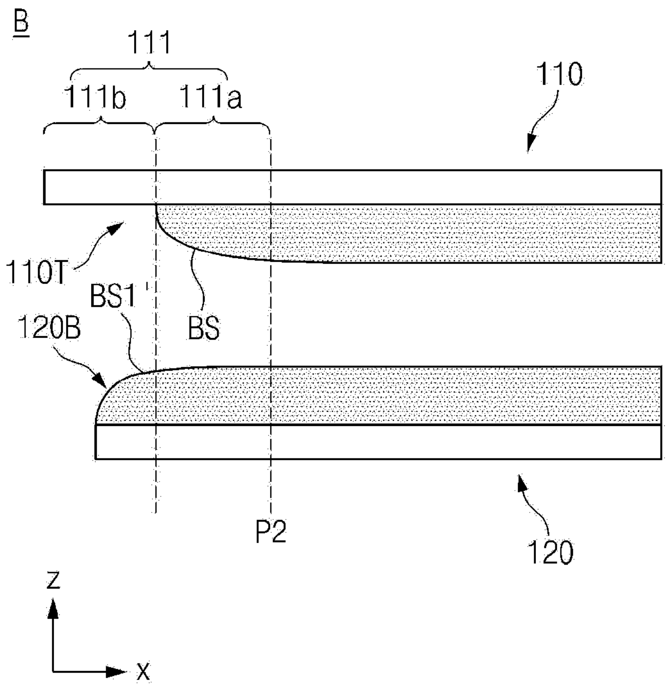
B
111
111b
111a
110
110T
BS1'
BS
120B
P2
120
z
x

[FIG. 8]

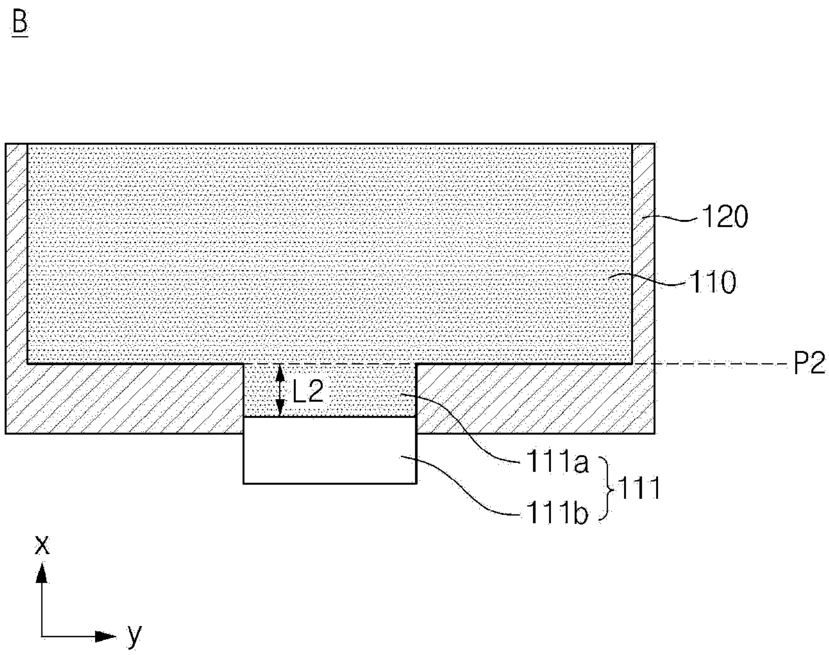
B
120
110
P2
L2
111a
111b
111
x
y

[FIG. 9]

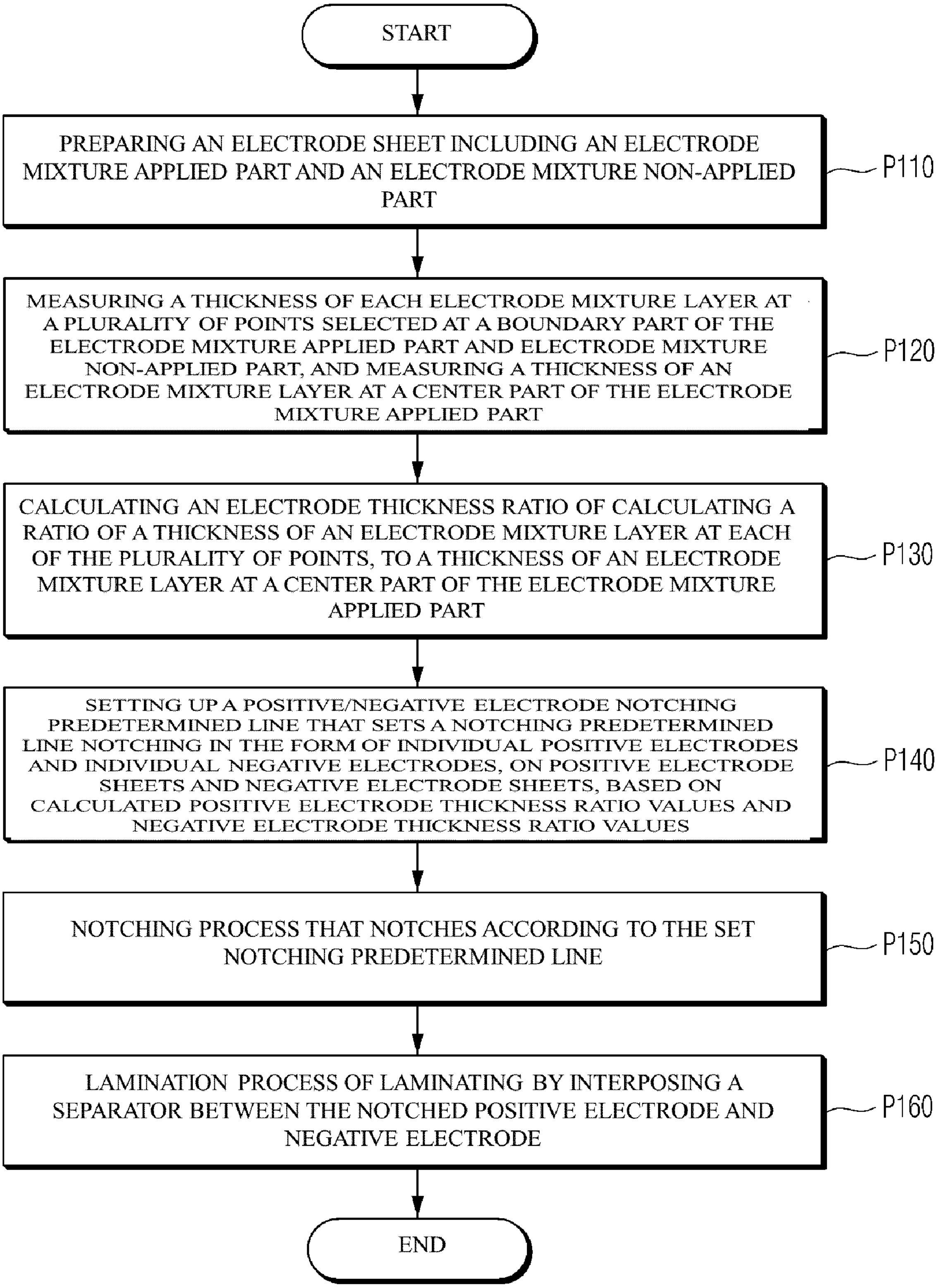
START
PREPARING AN ELECTRODE SHEET INCLUDING AN ELECTRODE MIXTURE APPLIED PART AND AN ELECTRODE MIXTURE NON-APPLIED PART
P110
MEASURING A THICKNESS OF EACH ELECTRODE MIXTURE LAYER AT A PLURALITY OF POINTS SELECTED AT A BOUNDARY PART OF THE ELECTRODE MIXTURE APPLIED PART AND ELECTRODE MIXTURE NON-APPLIED PART, AND MEASURING A THICKNESS OF AN ELECTRODE MIXTURE LAYER AT A CENTER PART OF THE ELECTRODE MIXTURE APPLIED PART
P120
CALCULATING AN ELECTRODE THICKNESS RATIO OF CALCULATING A RATIO OF A THICKNESS OF AN ELECTRODE MIXTURE LAYER AT EACH OF THE PLURALITY OF POINTS, TO A THICKNESS OF AN ELECTRODE MIXTURE LAYER AT A CENTER PART OF THE ELECTRODE MIXTURE APPLIED PART
P130
SETTING UP A POSITIVE/NEGATIVE ELECTRODE NOTCHING PREDETERMINED LINE THAT SETS A NOTCHING PREDETERMINED LINE NOTCHING IN THE FORM OF INDIVIDUAL POSITIVE ELECTRODES AND INDIVIDUAL NEGATIVE ELECTRODES, ON POSITIVE ELECTRODE SHEETS AND NEGATIVE ELECTRODE SHEETS, BASED ON CALCULATED POSITIVE ELECTRODE THICKNESS RATIO VALUES AND NEGATIVE ELECTRODE THICKNESS RATIO VALUES
P140
NOTCHING PROCESS THAT NOTCHES ACCORDING TO THE SET NOTCHING PREDETERMINED LINE
P150
LAMINATION PROCESS OF LAMINATING BY INTERPOSING A SEPARATOR BETWEEN THE NOTCHED POSITIVE ELECTRODE AND NEGATIVE ELECTRODE
P160
END

[FIG. 10]

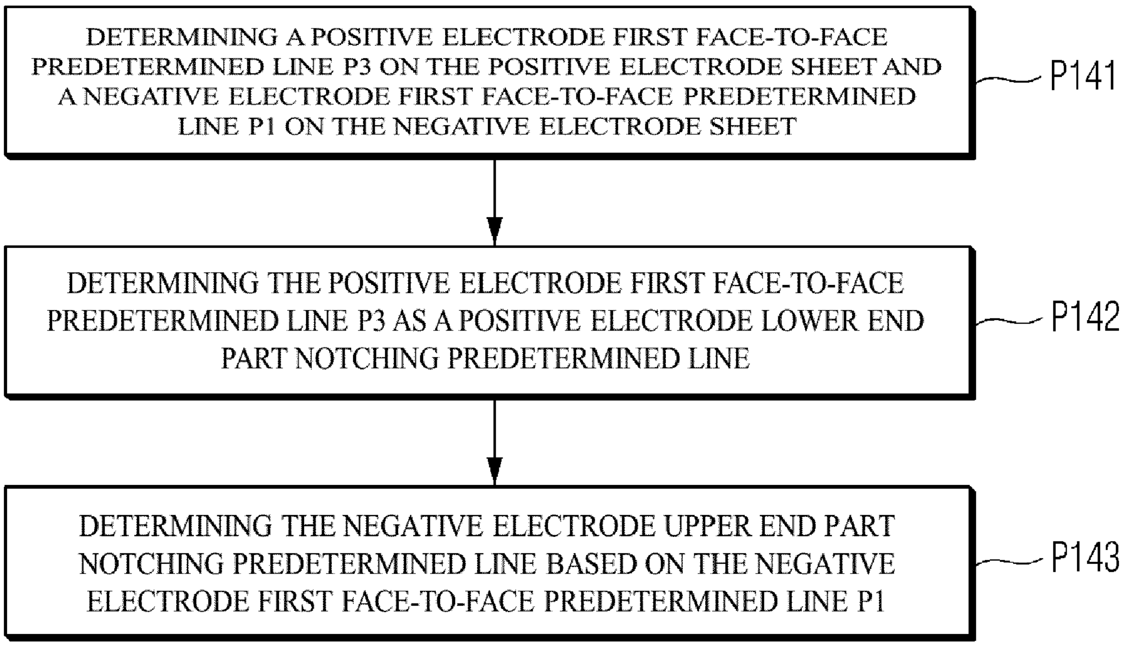
DETERMINING A POSITIVE ELECTRODE FIRST FACE-TO-FACE PREDETERMINED LINE P3 ON THE POSITIVE ELECTRODE SHEET AND A NEGATIVE ELECTRODE FIRST FACE-TO-FACE PREDETERMINED LINE P1 ON THE NEGATIVE ELECTRODE SHEET
P141
DETERMINING THE POSITIVE ELECTRODE FIRST FACE-TO-FACE PREDETERMINED LINE P3 AS A POSITIVE ELECTRODE LOWER END PART NOTCHING PREDETERMINED LINE
P142
DETERMINING THE NEGATIVE ELECTRODE UPPER END PART NOTCHING PREDETERMINED LINE BASED ON THE NEGATIVE ELECTRODE FIRST FACE-TO-FACE PREDETERMINED LINE P1
P143

[FIG. 11]

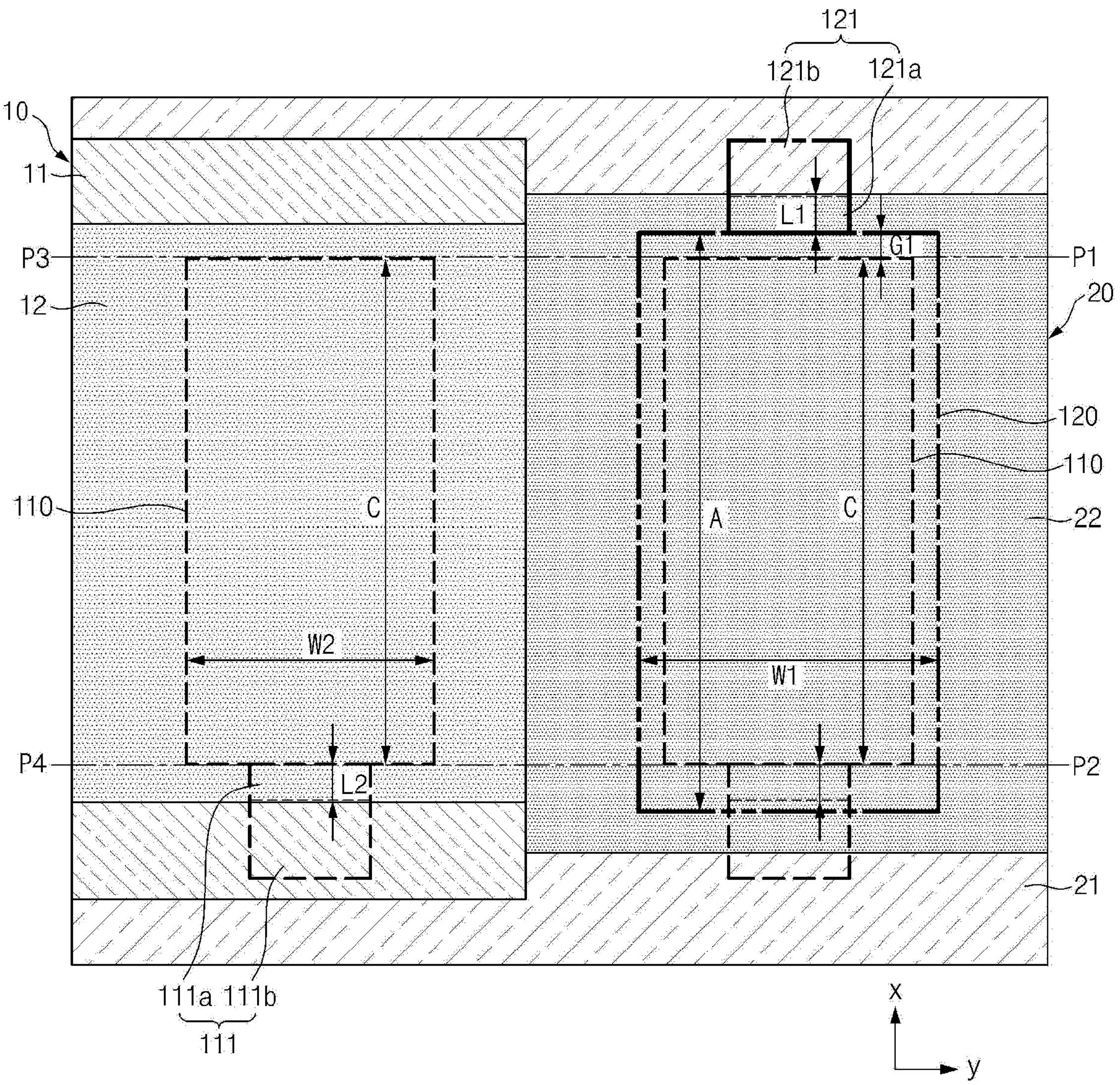
121
121b
121a
10
11
L1
G1
P3
P1
20
12
120
110
110
C
A
C
22
W2
W1
P4
L2
P2
21
111a
111b
111
x
y

[FIG. 12]

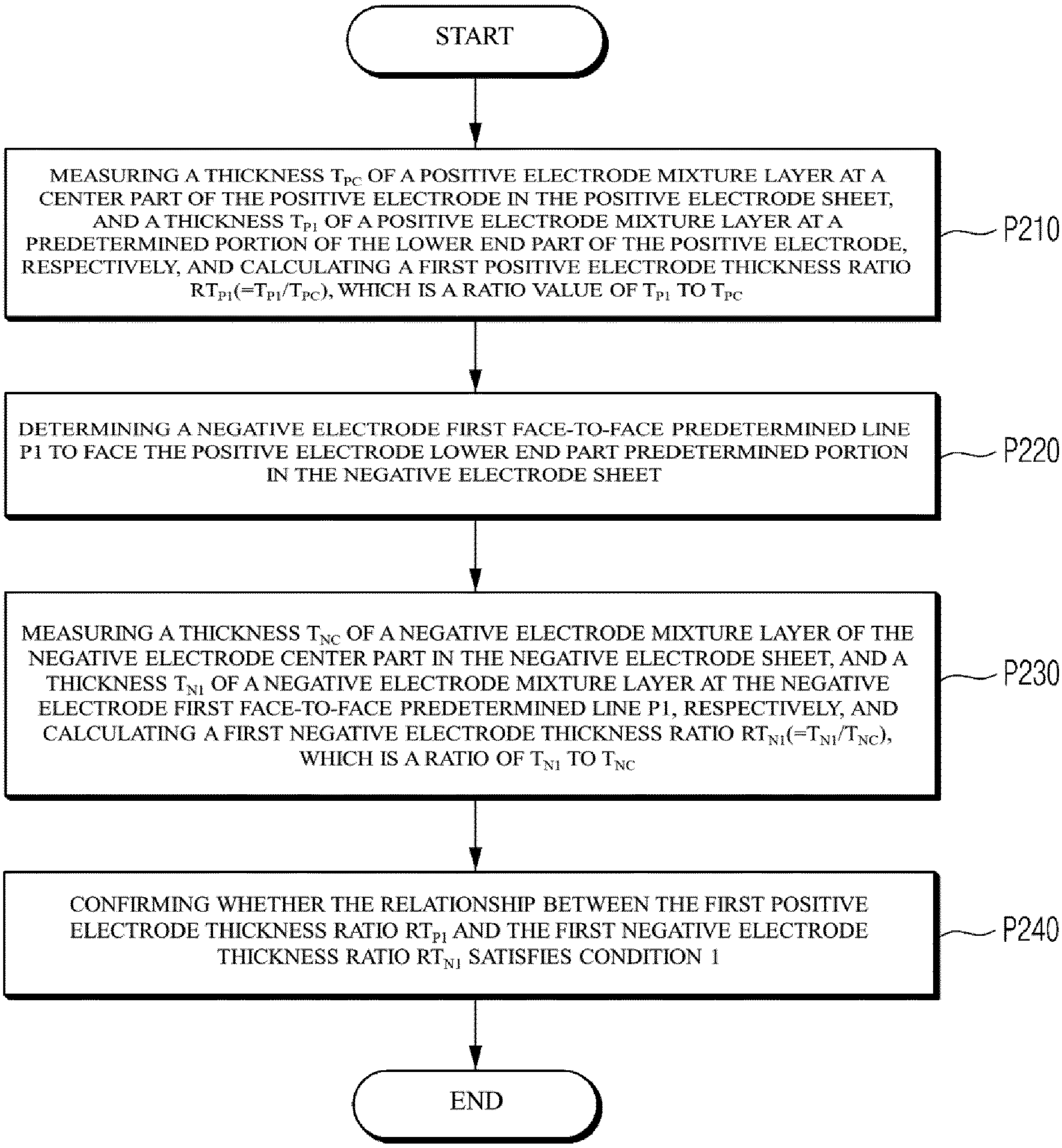
START
MEASURING A THICKNESS $T_{PC}$ OF A POSITIVE ELECTRODE MIXTURE LAYER AT A CENTER PART OF THE POSITIVE ELECTRODE IN THE POSITIVE ELECTRODE SHEET, AND A THICKNESS $T_{P1}$ OF A POSITIVE ELECTRODE MIXTURE LAYER AT A PREDETERMINED PORTION OF THE LOWER END PART OF THE POSITIVE ELECTRODE, RESPECTIVELY, AND CALCULATING A FIRST POSITIVE ELECTRODE THICKNESS RATIO $RT_{P1}(=T_{P1}/T_{PC})$, WHICH IS A RATIO VALUE OF $T_{P1}$ TO $T_{PC}$
P210
DETERMINING A NEGATIVE ELECTRODE FIRST FACE-TO-FACE PREDETERMINED LINE P1 TO FACE THE POSITIVE ELECTRODE LOWER END PART PREDETERMINED PORTION IN THE NEGATIVE ELECTRODE SHEET
P220
MEASURING A THICKNESS $T_{NC}$ OF A NEGATIVE ELECTRODE MIXTURE LAYER OF THE NEGATIVE ELECTRODE CENTER PART IN THE NEGATIVE ELECTRODE SHEET, AND A THICKNESS $T_{N1}$ OF A NEGATIVE ELECTRODE MIXTURE LAYER AT THE NEGATIVE ELECTRODE FIRST FACE-TO-FACE PREDETERMINED LINE P1, RESPECTIVELY, AND CALCULATING A FIRST NEGATIVE ELECTRODE THICKNESS RATIO $RT_{N1}(=T_{N1}/T_{NC})$, WHICH IS A RATIO OF $T_{N1}$ TO $T_{NC}$
P230
CONFIRMING WHETHER THE RELATIONSHIP BETWEEN THE FIRST POSITIVE ELECTRODE THICKNESS RATIO $RT_{P1}$ AND THE FIRST NEGATIVE ELECTRODE THICKNESS RATIO $RT_{N1}$ SATISFIES CONDITION 1
P240
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20220057713 A